(19) Europäisches Patentamt
European Patent Office
Office européen des brevets

(11) **EP 4 150 301 B1**

(12) **FASCICULE DE BREVET EUROPEEN**

(45) Date de publication et mention
de la délivrance du brevet:
**25.06.2025 Bulletin 2025/26**

(21) Numéro de dépôt: **21723873.2**

(22) Date de dépôt: **11.05.2021**

(51) Classification Internationale des Brevets (IPC):
**G01C 25/00** *(2006.01)*   **G01D 5/347** *(2006.01)*
**G01D 5/244** *(2006.01)*   **G01D 18/00** *(2006.01)*

(52) Classification Coopérative des Brevets (CPC):
**G01D 5/2449; G01D 18/001;** G05B 2219/37151

(86) Numéro de dépôt international:
**PCT/EP2021/062492**

(87) Numéro de publication internationale:
**WO 2021/228860 (18.11.2021 Gazette 2021/46)**

(54) **PROCÉDÉ D'ESTIMATION D'ERREURS ANGULAIRES DE CODEURS ANGULAIRES DANS DES APPAREILS ROTATIFS DE PRÉCISION, APPAREIL**

VERFAHREN ZUR SCHÄTZUNG VON WINKELFEHLERN VON WINKELKODIERERN IN PRÄZISIONSROTATIONSVORRICHTUNGEN, VORRICHTUNG

METHOD FOR ESTIMATING ANGULAR ERRORS OF ANGLE CODERS IN PRECISION ROTARY DEVICES, DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **15.05.2020  FR 2004817**

(43) Date de publication de la demande:
**22.03.2023  Bulletin 2023/12**

(73) Titulaire: **EXAIL**
**78100 Saint-Germain-en-Laye (FR)**

(72) Inventeurs:
• **VAU, Bernard**
**78100 SAINT-GERMAIN-EN-LAYE (FR)**
• **BUSSUTIL, Mehdi**
**78100 SAINT-GERMAIN-EN-LAYE (FR)**

(74) Mandataire: **Jacobacci Coralis Harle**
**32, rue de l'Arcade**
**75008 Paris (FR)**

(56) Documents cités:
**US-A- 5 138 564**

• LU X D ET AL: "On-axis self-calibration of angle encoders", CIRP ANNALS, ELSEVIER BV, NL, CH, FR, vol. 59, no. 1, 1 January 2010 (2010-01-01), pages 529 - 534, XP027199752, ISSN: 0007-8506, [retrieved on 20100513]
• WANG YAN ET AL: "Study on self-calibration angle encoder using simulation method", BIOMEDICAL PHOTONICS AND OPTOELECTRONIC IMAGING : 8 - 10 NOVEMBER 2000, BEIJING, CHINA; [PROCEEDINGS // SPIE, INTERNATIONAL SOCIETY FOR OPTICAL ENGINEERING : P, ISSN 0038-7355], SPIE, BELLINGHAM, WASH., US, vol. 9903, 26 January 2016 (2016-01-26), pages 99032O - 99032O, XP060063488, ISBN: 978-1-62841-832-3, DOI: 10.1117/12.2217638
• VAU BERNARD ET AL: "An improved control structure for the tracking of sine command in a motion simulator", PROCEEDINGS OF SPIE; [PROCEEDINGS OF SPIE ISSN 0277-786X], SPIE, 1000 20TH ST. BELLINGHAM WA 98225-6705 USA, vol. 11057, 21 June 2019 (2019-06-21), pages 110570U - 110570U, XP060122842, ISSN: 0277-786X, ISBN: 978-1-5106-3927-0, DOI: 10.1117/12.2530038

## Description

### DOMAINE TECHNIQUE AUQUEL SE RAPPORTE L'INVENTION

La présente invention concerne de manière générale le domaine des appareillages de précision asservis comportant des actionneurs en rotation commandés, en particulier les simulateurs de mouvement et les centrifugeuses. Elle concerne plus particulièrement un procédé d'estimation des erreurs angulaires de codeurs angulaires dans des appareils rotatifs de précision ainsi qu'un appareil comportant des moyens permettant la mise en œuvre du procédé.

### ARRIERE-PLAN TECHNOLOGIQUE

On connaît les simulateurs de mouvement qui sont des appareils de haute précision destinés à soumettre notamment des composants ou systèmes inertiels à des déplacements parfaitement contrôlés pour les tester.

Les simulateurs de mouvements peuvent être mono ou multiaxes et chaque axe est mu par un ou des moteurs, le plus souvent électriques, et dont la position angulaire est asservie au moyen d'un dispositif de commande en boucle fermée. L'algorithme de commande génère en général une commande de courant proportionnelle à une commande de couple, qui est une consigne pour l'étage d'électronique de puissance associée au moteur. Cet algorithme de commande reçoit une consigne qui peut être de position, et/ou de vitesse et/ou d'accélération angulaire de l'axe à asservir et utilise, directement ou indirectement, également une mesure de position angulaire de l'axe asservi. Cette position angulaire renvoyée à l'asservissement est en général mesurée par un codeur angulaire. Ces codeurs peuvent être des codeurs optiques ou inductifs ou capacitifs ou magnétiques.

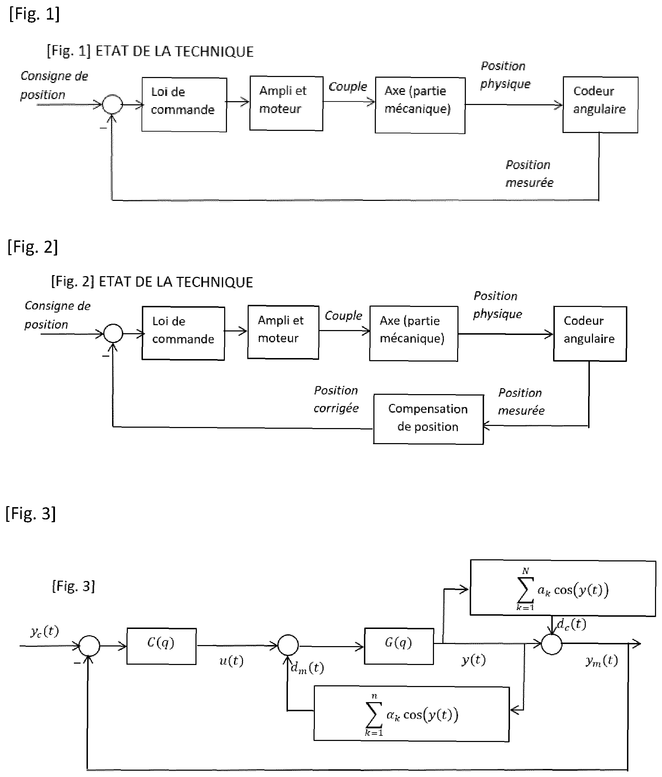

Le schéma bloc typique de la boucle d'asservissement correspondant à un axe d'un simulateur de mouvement est représenté dans la figure 1. Des variantes sont possibles au niveau de la loi de commande : la loi de commande peut être munie d'une action anticipatrice (« feedforward »), faisant agir directement la consigne sur la commande, éventuellement au travers d'un filtre. De même, il peut y avoir en plus de la consigne de position, des consignes de vitesse et d'accélération dans la structure. Dans certaines variantes, la position angulaire mesurée est dérivée avant de parvenir au correcteur, la consigne étant alors une consigne de vitesse associée avec, éventuellement, une consigne d'accélération. La structure de la boucle fermée de l'asservissement d'un axe de centrifugeuse est le même, avec également les mêmes variantes possibles.

Pour des raisons diverses, les mesures de positions angulaires fournies par ces codeurs sont nécessairement entachées d'erreurs. Ces erreurs peuvent être de nature aléatoire, du fait de bruits dans les dispositifs de traitement des signaux du système, mais une partie significative des erreurs de mesure sont de nature déterministe. Lorsque l'erreur est déterministe, cette erreur entre la position vraie de l'axe et la mesure fournie par le codeur est répétable pour chaque position de l'axe.

Actuellement, les erreurs de mesure des codeurs angulaires constituent la source prépondérante d'erreur de la position asservie de la machine.

Dans l'état de l'art, ces erreurs angulaires déterministes du codeur de position de la machine sont évaluées au moyen d'un dispositif optique externe au simulateur, constitué d'un interféromètre qui reçoit les faisceaux d'une source laser réfléchis par un miroir polygonal fixé sur l'axe du simulateur de mouvement. Les angles entre les faces du miroir polygonal sont connus avec une grande précision par une calibration préalable. L'évaluation des écarts angulaires des faisceaux réfléchis par chacune des faces du miroir lorsque l'axe de la machine est asservi à une position de consigne connue, permet d'estimer avec une précision en général inférieure à une seconde d'arc les erreurs angulaires du codeur, pour une position de consigne de l'axe. Le nombre de faces du miroir polygonal étant réduit, le plus souvent à 8 faces, le nombre de positions de l'axe de la machine pour lesquelles on dispose de l'erreur du codeur est par conséquent restreint. Ces mesures permettent néanmoins d'établir des tables de correction sur un tour complet par interpolation des erreurs codeurs connues sur ce nombre restreint de positions. Néanmoins, cette interpolation ne permet pas d'assurer une correction de position suffisamment précise telle que généralement requise pour le test de systèmes inertiels sur des positions pour lesquelles une mesure optique n'est pas possible.

Quoi qu'il en soit, lorsque qu'une table des erreurs angulaires du codeur a été établie par l'évaluation ci-dessus, on peut introduire dans la boucle d'asservissement une table de compensation dont la compensation est l'opposée de l'erreur codeur estimée, cette table de compensation étant insérée en aval de la mesure brute fournie par le codeur, afin de fournir à l'asservissement une position angulaire compensée. Une telle boucle d'asservissement est représentée figure 2. Afin d'avoir une estimation précise de l'erreur du codeur sur les $2\pi$ radians de l'axe, certaines méthodes « autonomes », c'est-à-dire sans faire appel à une méthode optique, de détermination de l'erreur du codeur ont été développées pour des axes rotatifs. On peut en particulier mentionner la méthode développée dans l'article « On-axis self-calibration of angle encoders » dont les auteurs sont X.D. Lu, R. Graetz, D. Amin-Shahidi, et K. Smeds dans CIRP annals, vol.59 (2010). Il s'agit ici d'observer le signal fourni par le codeur lorsque l'axe est en décélération, l'asservissement étant désactivé, à vitesse relativement élevée sur une plage angulaire en général de $4\pi$ radians. Les ondulations de la position angulaire autour d'une composante quasi continue de la position (modélisé en général par un arc de parabole sur cette plage) renseignent sur les erreurs de mesure des codeurs. Cette méthode, dont le principe est simple, possède l'avantage de fournir une estimation de l'erreur déterministe du codeur sur 360°.

Cependant, on remarque que les essais réalisés par les auteurs mentionnés ci-dessus, requièrent de faire l'essai lorsque l'asservissement est désactivé, et mettent en œuvre un dispositif rotatif constitué d'un roulement à air, de façon à minimiser les frottements le plus possible. Or, si les effets des frottements sont représentés généralement par des modèles déterministes (il en existe de nombreux, Coulomb, Dahl, Lugre...) en fonction de la vitesse, il n'en demeure pas moins que ces frottements résultent d'un très grand nombre de phénomène à l'échelle atomique, ce qui fait qu'en pratique, que ces frottements ont, en partie, un comportement aléatoire lorsque l'axe du simulateur fonctionne à une vitesse donnée.

Or, les simulateurs de mouvement et centrifugeuses sont généralement équipés de roulement à bille, et les perturbations aléatoires effectives dues aux frottements réels sont donc bien plus importantes que dans l'expérience de l'article précité. Pour cette raison, la méthode présentée dans cet article n'est pas transposable au cas des simulateurs de mouvements car, du fait des perturbations aléatoires dues aux frottements, elle mènerait à des estimations des erreurs de codeurs entachées d'incertitudes d'un tel niveau que cette estimation ne serait pas exploitable.

Afin de réduire les incertitudes, on pourrait imaginer d'employer la méthode précédente en augmentant le nombre de tours sur lesquels l'estimation est réalisée car le fait de bénéficier de plus d'information permet d'atténuer les incertitudes sur les estimés. Cependant, on se heurte alors au fait que le test est réalisé en phase de décélération et, surtout, sans asservissement, c'est-à-dire en boucle ouverte, et l'utilisateur n'est donc pas maître de la durée du test. En pratique, l'utilisateur ne disposera pas d'une durée de décélération suffisante pour obtenir une bonne précision des estimés.

Il serait souhaitable de pouvoir disposer d'un procédé d'estimation des erreurs de codeurs où les mesures lors de la phase de test pourrait durer aussi longtemps qu'on le souhaite, de façon à disposer d'une quantité d'information acquise suffisamment grande, permettant de réduire significativement les incertitudes de l'estimation.

C'est ce que propose le procédé de l'invention dans lequel on stimule/excite le système et on effectue des mesures de position pour estimer les erreurs des codeurs sur le système qui est et reste en boucle fermée, tout comme il l'est dans la phase d'utilisation ultérieure du système, c'est-à-dire lorsque l'asservissement de position est actif de façon à ne pas être contraint par la décélération naturelle de l'axe.

Cependant, le fait de réaliser ces mesures pour estimer les erreurs des codeurs sur un système en boucle fermée entraîne certaines difficultés spécifiques qui sont expliquées dans la partie de description détaillée de l'invention et qui sont surmontées par l'invention.

On connait également les documents suivants : US 5138 564 A ; de WANG YAN ET AL: "Study on self-calibration angle encoder using simulation method", BIOMEDICAL PHOTONICS AND OPTOELECTRONIC IMAGING (SOCIETY FOR OPTICAL ENGINEERING) vol. 9903, ISBN: 978-1-62841-832-3; et de VAU BERNARD ET AL: "An improved control structure for the tracking of sine command in a motion simulator", PROCEEDINGS OF SPIE; vol. 11057, ISBN: 978-1-5106-3927-0.

**OBJET DE L'INVENTION**

Afin de remédier aux inconvénients précités, la présente invention propose un procédé d'estimation d'erreurs angulaires de codeurs angulaires pour un système bouclé/asservi comportant au moins un actionneur en rotation d'un axe et un codeur angulaire produisant un signal de mesure de position dudit axe, et comportant un dispositif de calcul pour au moins commander ledit actionneur,

le dispositif de calcul recevant, d'une part, un signal de consigne en entrée du système, notamment un signal de consigne de position $y_c(t)$ et, d'autre part, le signal de mesure, pour bouclage/asservissement du système, l'actionneur en rotation générant des ondulations de couple $d_m(t)$, le codeur produisant des erreurs de codeur $d_c(t)$ qui, pour un signal de consigne $y_c(t)$ qui correspond à une rotation de l'axe à vitesse supposée constante $\omega_r$, ont un

spectre constitué de la fréquence de rotation fondamentale $\omega_r$ et de ses harmoniques $k\omega_r$, $k \in \mathbb{N}$, le dispositif de calcul calculant dans un correcteur un signal de commande, dans lequel, dans une phase de test, on synthétise, pour une vitesse de rotation indicée $j$, $\omega_{rj}$ supposée constante, un correcteur spécifique $C_{\omega_{rj}}(q)$ de ladite vitesse de rotation $\omega_{rj}$ constante, ledit correcteur $C_{\omega_{rj}}(q)$ étant tel que pour le domaine fréquentiel comprenant la fréquence fondamentale

$\omega_{rj}$ et un nombre déterminé de ses premiers harmoniques $k\omega_{rj}$, $k \in \mathbb{N}$, $1 < k \leq N_j$, le correcteur présentant un gain sensiblement nul à ces fréquences $\omega_{rj}$, $k\omega_{rj}$, ce qui entraîne une ouverture de la boucle auxdites fréquences et on établit une relation matricielle entre les mesures de position et une fonction de paramètres caractérisant les erreurs du codeur et les ondulations de couple, sur le système avec le correcteur spécifique et à la vitesse de rotation $\omega_{rj}$

constante,

on répète un nombre *n* déterminé de fois la phase de test avec des consignes de rotation à vitesse supposée constante différentes $\omega_{rj}$ où , $j \in \mathbb{N}$ , $1 < j \leq n$,

on concatène les relations matricielle afin d'obtenir une relation matricielle globale identifiable,

on estime les paramètres caractérisant les erreurs du codeur et les ondulations de couple par résolution de la relation matricielle globale.

Le qualificatif « supposée » pour la vitesse dans la définition du signal de consigne $y_c(t)$, est utilisé afin de signifier qu'on utilise une consigne, notamment une rampe pour une consigne de position, qui, en l'absence de tout défaut du système, donnerait une mesure de vitesse de rotation constante de l'axe mais qui, dans la réalité, donne une mesure de vitesse perturbée par, notamment, les erreurs du codeur et les ondulations de couple, et qu'on ne cherche pas ici à envoyer une consigne contrant ces erreurs et ondulations de couple.

D'autres caractéristiques non limitatives et avantageuses du procédé conforme à l'invention, prises individuellement ou selon toutes les combinaisons techniquement possibles, sont les suivantes :

- la vitesse de rotation de l'axe est exprimée en rad/s,
- en outre, une fois les paramètres caractérisant les erreurs du codeur et les ondulations de couple estimés, le dispositif de calcul est configuré pour l'exécution en temps réel du calcul d'un signal de compensation des erreurs du codeurs afin de compenser les erreurs du codeur,
- le dispositif de calcul est en outre configuré pour la prise en compte en temps réel des ondulations de couple et les corriger,
- le calcul du signal de compensation des erreurs du codeurs est effectué dans un bloc de calcul de compensation du dispositif de calcul,
- on détermine préalablement une plage [$\omega_{low}$ , $\omega_{high}$] de fréquence de rotation de l'actionneur dans laquelle le module de la fonction de transfert de l'axe présente une décroissance de sensiblement 40 dB/décade,
- dans les phases de test, on choisit en outre les différentes vitesses de rotation $\omega_{rj}$ afin que chaque vitesses de rotation constantes $\omega_{rj}$ et ses $N_l$ harmoniques $k\omega_{rj}$ soient, comprises dans la plage [$\omega_{low}$ , $\omega_{high}$],
- on détermine la plage [$\omega_{low}$ , $\omega_{high}$] de fréquence de rotation de l'actionneur dans laquelle le module de la fonction de transfert de l'axe présente une décroissance de sensiblement 40 dB/décade par une méthode choisie parmi :

$$G\left(e^{i\omega}\right) = \left|\frac{B(e^{i\omega})}{A(e^{i\omega})}\right|$$

une méthode graphique utilisant la courbe du gain de la fonction de transfert de l'axe et on détermine une borne inférieure $\omega_{low}$ et une borne supérieure $\omega_{high}$ de fréquences encadrant une zone de la courbe ayant une décroissance de sensiblement 40 dB/décade,
une méthode d'identification notamment paramétrique,

- dans la phase de test, la consigne en entrée du système est un signal de consigne de position $y_c(t)$ en rampe, ou un signal de consigne de vitesse constante,
- dans la phase de test, le signal de consigne de position $y_c(t)$ en rampe est croissant au cours du temps,
- dans la phase de test, le signal de consigne de position $y_c(t)$ en rampe est décroissant au cours du temps,
- le nombre $N_l$ d'harmoniques $k\omega_{rj}$ est identique pour les n tests avec des consignes de rotation à vitesse différentes $\omega_{rj}$,
- le correcteur est synthétisé soit par une méthode des sensibilités mixtes sur une commande H-infini, soit par une méthode de placement de pôles robustes sur correcteur RST,
- la relation matricielle entre les mesures de position et une fonction de paramètres caractérisant les erreurs du codeur et les ondulations de couple s'exprime par :

$$Y_j = \phi_j \theta + D_j$$

avec
$$\phi_j = \begin{bmatrix} \varphi(0) \\ \varphi(1) \\ \vdots \\ \varphi(t_f) \end{bmatrix} \qquad Y_j = \begin{bmatrix} y'_m(0) \\ y'_m(1) \\ \vdots \\ y'_m(t_f) \end{bmatrix}$$

où $Y_j$ est un vecteur de mesures de position centrée de coefficients $y'_m(t)$ , et $\varphi(t) = [\cos (y_m(t)) \sin (y_m(t)) \cos (2y_m(t)) \sin (2y_m(t)) \ldots$

$$\cdots \frac{1}{(\omega_r)^2}\cos\left(y_m(t)\right) \quad \frac{1}{(\omega_r)^2}\sin\left(y_m(t)\right) \quad \frac{1}{(2\omega_r)^2}\cos\left(2y_m(t)\right) \quad \frac{1}{(2\omega_r)^2}\sin\left(2y_m(t)\right) \quad \cdots \Big] \; \text{et}$$

$$\theta^T = \begin{bmatrix} a_1 & b_1 & a_2 & b_2 & \cdots & \alpha'_1 & \beta'_1 & \alpha'_2 & \beta'_2 & \cdots \end{bmatrix}$$ vecteur transposé des paramètres caractérisant les erreurs du codeur et les ondulations de couple, et
$D_j$ un vecteur de termes de perturbation centrée,

- le vecteur $Y_j$ est un vecteur colonne,
- la relation matricielle globale identifiable $Y = \phi\theta + D$
avec :

$$Y = \begin{bmatrix} Y_1 \\ Y_2 \\ \vdots \\ Y_n \end{bmatrix} \qquad \phi = \begin{bmatrix} \phi_1 \\ \phi_2 \\ \vdots \\ \phi_n \end{bmatrix}$$

est employée pour produire une estimation $\hat{\theta}$ des paramètres caractérisant les erreurs du codeur et les ondulations de couple par régression linéaire et application d'une relation des moindres carrés selon $\hat{\theta} = (\phi^T\phi)^{-1}\phi^T Y,$

- l'estimation $\hat{\theta}$ du vecteur $\theta$ des paramètres caractérisant les erreurs du codeur et les ondulations de couple est calculée par itération,
- l'estimation $\hat{\theta}$ du vecteur $\theta$ des paramètres caractérisant les erreurs du codeur et les ondulations de couple est calculée par itération : suite à une première répétition de phases de tests et un premier calcul des paramètres caractérisant les erreurs du codeur et les ondulations de couple par résolution de la relation matricielle globale, un premier vecteur estimé $\hat{\theta}_1$ est estimé, le signal de compensation des erreurs de codeur étant ensuite calculé et les ondulations de couple étant ensuite prises en compte sur la base dudit premier vecteur estimé $\hat{\theta}_1$, on effectue sur le système ainsi compensé sur la base dudit premier vecteur estimé $\hat{\theta}_1$, lors d'une première itération, une nouvelle répétition de phases de tests et un nouveau calcul des paramètres caractérisant les erreurs du codeur et les ondulations de couple par résolution de la relation matricielle globale, un nouveau vecteur estimé $\hat{\theta}_2$ étant estimé, le signal de compensation des erreurs de codeur étant ensuite calculé et les ondulations de couple étant ensuite prises en compte sur la base de la somme du précédent vecteur estimés $\hat{\theta}_1$ et du nouveau vecteur estimé $\hat{\theta}_2$, et on effectue des itérations ultérieures sur le système compensé sur la base de la somme des précédents vecteurs estimés $\hat{\theta}_1 + \hat{\theta}_2 + \hat{\theta}_3 \dots$
- dans le cas où une estimation $\hat{\theta}$ du vecteur $\theta$ des paramètres caractérisant les erreurs du codeur et les ondulations de couple est calculée par itération, on fixe un critère d'arrêt aux itérations,
- la relation matricielle globale identifiable $Y = \phi\theta + D$
avec :

$$Y = \begin{bmatrix} Y_1 \\ Y_2 \\ \vdots \\ Y_n \end{bmatrix} \qquad \phi = \begin{bmatrix} \phi_1 \\ \phi_2 \\ \vdots \\ \phi_n \end{bmatrix}$$

est employée pour produire une estimation $\hat{\theta}$ des paramètres caractérisant les erreurs du codeur et les ondulations de couple et avec une méthode de régularisation utilisant la relation suivante :

$$\hat{\theta} = (\phi^T\phi + H)^{-1}\phi^T Y$$

où $H$ est une matrice carrée définie positive de la taille de $\phi^T\phi$,
- on met en œuvre une méthode de mesure optique interférométrique pour les mesures des erreurs de position de codeur, lesdites mesures étant réalisées sur un nombre fini $n_p$ de positions de l'axe, et dans lequel l'estimation $\hat{\theta}$ des paramètres caractérisant les erreurs du codeur et les ondulations de couple est obtenue par minimisation d'un critère quadratique $J = (Y - \phi\theta)^T(Y - \phi\theta)$ sous la contrainte égalité $E_c = C\theta$ où $C$ est une matrice telle que

$$C = \begin{bmatrix} \cos(y_1^*) & \sin(y_1^*) & \cdots & \cos(Ny_1^*) & \sin(Ny_1^*) & 0_{1,N_l} \\ \vdots & \vdots & \vdots & \vdots & \vdots & \vdots \\ \cos(y_{n_p}^*) & \sin(y_{n_p}^*) & \cdots & \cos(Ny_{n_p}^*) & \cos(Ny_{n_p}^*) & 0_{1,N_l} \end{bmatrix}$$

$y_i^*$ correspondant aux $n_p$ position des mesures sur l'axe, $i \in [1, \cdots n_p]$,
et $N$ étant le rang maximal d'harmonique d'une décomposition en série de Fourrier des erreurs de codeur,

- certaines harmoniques $k\omega_{rj}$ sont omises pour l'estimation des paramètres caractérisant les erreurs du codeur et les ondulations de couple,
- les harmoniques $k\omega_{rj}$ omises sont des harmoniques intermédiaires,
- toutes les harmoniques $k\omega_{rj}$ sont utilisées pour l'estimation des paramètres caractérisant les erreurs du codeur et les ondulations de couple,
- la détermination par identification de la fonction de transfert de l'axe est effectué sur le système bouclé,
- la détermination par identification de la fonction de transfert de l'axe est effectué sur le système qui est placé dans une configuration non bouclée.

L'invention propose également un appareil comportant au moins un axe rotatif, ledit appareil étant un simulateur de mouvement ou une centrifugeuse et comportant un système bouclé/asservi comportant au moins un actionneur en rotation de l'axe et un codeur angulaire produisant un signal de mesure de position dudit axe, et comportant un dispositif de calcul pour au moins commander ledit actionneur, le dispositif de calcul recevant, d'une part, un signal de consigne en entrée du système, notamment un signal de consigne de position $y_c(t)$ et, d'autre part, le signal de mesure, pour bouclage/asservissement du système, l'actionneur en rotation générant des ondulations de couple $d_m(t)$, le codeur produisant des erreurs de codeur $d_c(t)$ qui, pour un signal de consigne $y_c(t)$ qui correspond à une rotation de l'axe à vitesse supposée constante $\omega_r$, ont un spectre constitué de la fréquence de rotation fondamentale $\omega_r$ et de ses harmoniques $k\omega_r$, $k \in \mathbb{N}$, le dispositif de calcul calculant en outre dans un correcteur un signal de commande, le dispositif de calcul étant configuré pour l'exécution du procédé de l'invention afin d'estimer des paramètres caractérisant les erreurs du codeur et les ondulations de couple.

De préférence, dans l'appareil, le dispositif de calcul est en outre configuré, une fois les paramètres caractérisant les erreurs du codeur et les ondulations de couple estimés, pour permettre le calcul en temps réel dans un bloc de calcul de compensation d'un signal de compensation des erreurs du codeurs afin de compenser les erreurs du codeur selon le procédé de l'invention.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] représente un système en boucle fermée de l'état de la technique pour asservissement d'un axe de simulateur de mouvement de l'état de la technique sous forme d'une représentation en blocs,

[Fig. 2] représente le système de la figure 1 de l'état de la technique mais comportant en plus un bloc de compensation de position pour compensation des erreurs du codeur angulaire, de l'état de la technique,

[Fig. 3] représente un système en boucle fermée/asservi d'un axe de simulateur de mouvement sous forme d'un bloc-diagramme, permettant de visualiser les sources de perturbations spatialement périodiques du capteur (erreur de codeur) et de l'actionneur (typiquement : ondulations de couple/« cogging ») qui est en général un moteur électrique,

[Fig. 4] représente la courbe du module de la fonction de sensibilité directe selon la représentation de Bode pour un système typique en boucle fermée/asservi d'un axe de simulateur de mouvement,

[Fig. 5] représente un exemple typique de diagramme de Bode en amplitude et phase de la fonction de transfert de l'axe rotatif,

[Fig. 6] représente le système en boucle fermée/asservi d'un axe de simulateur de mouvement sous forme d'un bloc-diagramme avec un bloc de calcul de compensation obtenu par le procédé de l'invention.

On va maintenant présenter les difficultés spécifiques rencontrées et la manière dont elles ont été résolues pratiquement ainsi que les différentes manières de mettre en œuvre la solution proposée, ce qui permettra de bien faire comprendre l'invention.

L'axe asservi est entraîné en rotation par un actionneur, typiquement un moteur, et il est soumis à deux types de perturbations périodiques spatialement :

- Les perturbations liées aux défauts du moteur, et qui sont communément appelées « cogging » ou ondulations de couple, sont des perturbations dépendant de la position de l'axe.
- Les perturbations liées aux erreurs de mesure du codeur angulaire qui sont également périodiques spatialement et qui sont celles que l'on cherche à estimer. A ces perturbations périodiques spatialement, s'ajoutent des perturbations diverses, par exemple des perturbations liées aux frottements qui possèdent une composante déterministe et une composante aléatoire.

Concernant le codeur angulaire :

Soit $y(t)$ la position physique de l'axe à l'instant $t$ et $y_m(t)$ la position mesurée telle que fournie par le codeur angulaire. Les erreurs du codeur agissent additivement sur la position $y(t)$, et elles sont périodiques spatialement, donc décomposables en série de Fourier, de sorte que l'on puisse écrire :

$$y_m(t) = y(t) + \sum_{k=1}^{N}[a_k \cos(y(t)) + b_k \sin(y(t))] \qquad (1)$$

Dans cette formule, on fait abstraction des perturbations aléatoires, c'est-à-dire qu'elles ne sont pas caractérisées.

On suppose que le rang maximal d'harmonique noté $N$ est fini ce qui correspond dans la pratique au fait que les harmoniques de rang de plus en plus élevé ont un effet perturbateur de plus en plus faible et peuvent être négligées. Les $a_k$, $b_k$ caractérisant les erreurs de codeur sont des termes d'une série de Fourier et ce sont des scalaires réels.

Concernant l'actionneur en rotation de l'axe, typiquement un moteur :

Soit $u(t)$ le couple du moteur en le supposant non entaché de perturbations, tel qu'issu de l'asservissement, et $u_e(t)$ le couple effectif/réel agissant sur l'axe. Si on se limite à des perturbations de couple périodiques spatialement, alors la relation entre $u(t)$ et $u_e(t)$ est donnée par la relation :

$$u_e(t) = u(t) + \sum_{k=1}^{N}[\alpha_k \cos(y(t)) + \beta_k \sin(y(t))] \qquad (2)$$

Cette relation est valide si on néglige la dynamique propre des boucles d'asservissement de courant gérées par l'amplificateur du moteur, ce qui est justifié du fait de la haute bande passante de ces boucles de courants, devant les fréquences des perturbations moteur et des erreurs moteurs en jeu ici.

A partir de cette équation (2), il est également possible de modéliser un couple de balourd, qui est lui aussi sinusoïdal sur $2\pi$ radians, c'est-à-dire pour $k = 1$. Le bloc diagramme de la boucle fermée perturbée est représenté figure 3 dans laquelle les paramètres sont les suivants :

$y_c(t)$ : consigne de position,
$y(t)$ : position physique/réelle (non accessible),
$y_m(t)$ : position mesurée par le codeur,
$d_c(t)$ : erreur du codeur,
$d_m(t)$ : ondulations de couple ou « cogging »,
$u(t)$ : signal de commande de couple fournie par le correcteur et qui correspond au couple du moteur en le supposant non entaché de perturbations et tel qu'issu de l'asservissement,
$u_e(t)$ : couple effectif/réel, ce couple étant perturbé par les ondulations de couple ou « cogging »,
$G(q)$ : opérateur de la fonction de transfert de l'axe,
$C(q)$ : opérateur de transfert la fonction du correcteur,
$q$ : opérateur d'avance d'une période d'échantillonnage, le procédé mettant en œuvre un système échantillonné pour les mesures et les calculs, les calculs étant effectués par un calculateur typiquement programmable, notamment du type à microprocesseur. Les fonctions de transfert du correcteur et de l'axe sont donc représentées en temps discret.

La relation entre $d_c(t)$ , $d_m(t)$ et $y_m(t)$ est donnée par la relation suivante :

$$y_m(t) = \frac{1}{1+C(q)G(q)} d_c(t) + \frac{G(q)}{1+C(q)G(q)} d_m(t) + \bar{y}(t) \qquad (3)$$

où $\bar{y}(t)$ serait la position physique de l'axe non entachée des perturbations de couple.

Dans cette relation (3), $d_c(t)$ dépend de $y(t)$ et $d_m(t)$ dépend indirectement de $y(t)$.

A partir de cette relation (3), on constate que lorsque le correcteur est actif, l'effet de $d_c(t)$ sur $y_m(t)$ se fait via la fonction de sensibilité directe :

$$S_{y_m d_c}(q) = \frac{1}{1+C(q)G(q)},$$

et

l'effet de $d_m(t)$ sur $y_m(t)$ se fait via la fonction de sensibilité :

$$S_{y_m d_m}(q) = \frac{G(q)}{1+C(q)G(q)}.$$

L'effet des erreurs du codeur sur la position fournie par ledit codeur est indirect en boucle fermée, puisqu'il dépend de la fonction de sensibilité directe $S_{y_m d_c}(q)$. Ainsi, appliquer la méthode de l'article Lu et al. (2010), ne pourrait qu'aboutir à une estimation fortement erronée (biaisée), même en cas de perturbations aléatoires faibles. Aussi, il est nécessaire de développer un procédé d'estimation des erreurs des codeurs qui tienne compte de la spécificité du fonctionnement en boucle fermée du système.

Or, si la fonction de transfert du correcteur est connue en général de façon certaine, la fonction de transfert $G(q)$ de l'axe est, dans une certaine mesure, incertaine. En première approximation, cette fonction résulte de la seconde loi de Newton et, de fait, dans une plage de fréquence significativement large, on note que le gain de $G(q)$ décroit de 40dB/décade, ce qui est le propre d'un double intégrateur.

Néanmoins, cette propriété de décroissance de 40dB/décade n'est pas vérifiée en basse fréquence où la décroissance du gain tend asymptotiquement vers 20dB/décade du fait des frottements visqueux, ni en haute fréquence où des résonances et antirésonances de structure se manifestent.

Comme $G(q)$ n'est pas connue de façon certaine, il en va de même $S_{y_m d_c}(q)$. Ainsi toute estimation de $d_c(t)$ à partir de $y_m(t)$ en utilisant une expression théorique de $S_{y_m d_c}(q)$ risquerait d'amener des erreurs d'estimation. Il faut donc qu'aux fréquences auxquelles se manifestent les effets de $d_c(t)$, la fonction de sensibilité directe $s_{y_m d_c}(q)$ ait un gain et une phase connus de façon certaine, cela malgré les incertitudes sur $G(q)$, ce qui entraîne des difficultés spécifiques et nécessite de mettre en œuvre un nouveau procédé de synthèse du correcteur qui est spécifique à l'utilisation du système en boucle fermée pour une estimation des erreurs du codeur angulaire.

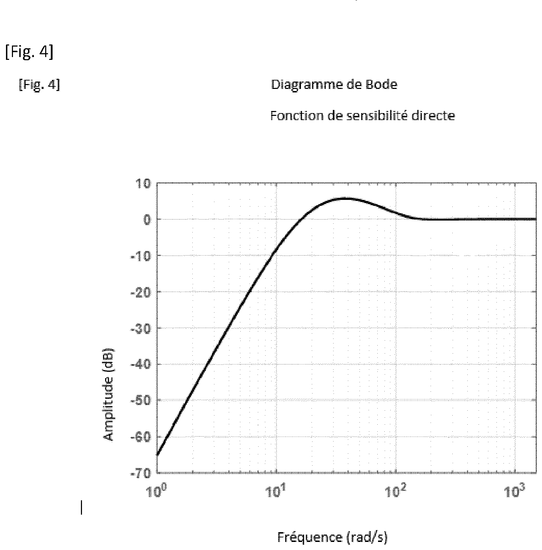

On donne à titre d'exemple dans la figure 4, le module typique que peut posséder la fonction de sensibilité directe $S_{y_m d_c}$ en fonction de la vitesse ou fréquence de rotation (ces deux termes étant considérés équivalents) en rad/s. On voit que son module n'est égal à 0 dB que seulement en haute fréquence. Pour des fréquences plus basses, le gain de la fonction de sensibilité directe est différent de 1, et donc à ces fréquences plus basses, cette fonction de sensibilité amène du biais sur l'estimation de $d_c(t)$ si on utilise la méthode d'estimation décrite dans l'article de X.D. Lu et al. (2010) cité précédemment.

On va maintenant détailler le procédé d'estimation des erreurs du codeur angulaire sur un système en boucle fermée/asservi, tel que proposé par l'invention.

Pour ces explications, on suppose que le correcteur mis en œuvre est de type RST. Cependant, dans d'autres modalités de mise en œuvre on peut utiliser d'autres types de correcteurs, d'autant plus que le correcteur RST est la forme la plus générale de correcteur monovariable, et que toutes les autres structures de correcteurs peuvent s'y ramener.

Dans le cas d'un appareillage comportant plusieurs axes, chaque axe met en œuvre son propre procédé de l'invention.

Pour cette structure générique RST de correcteur, la commande obtenue par $C(q)$ s'écrit :

$$u(t) = -\frac{R(q)}{S(q)} y_m(t) + \frac{T(q)}{S(q)} y_c(t) \qquad (4)$$

Dans la figure 3, qui est un cas particulier d'implémentation, on a pris implicitement $T(q) = R(q)$. Les paramètres $R(q), S(q), T(q)$ sont des polynômes en $q$, $S(q)$ étant un polynôme monique. L'opérateur de transfert représentant le système réel s'exprime comme une fraction de deux polynômes $B(q^{-1})$ et $A(q^{-1})$, ce dernier polynôme étant monique, tel que :

$$G(q) = \frac{B(q)}{A(q)} \tag{5}$$

La méthode de caractérisation de $d_c$ (erreur de codeur) proposée consiste à effectuer des tests sur le système qui est et qui reste physiquement en boucle fermée. On rappelle que le système comporte des moyens de calcul et de commande, l'actionneur en rotation et un capteur, et qu'il reçoit une consigne qui est ici une consigne de position pour simplifier les explications mais il pourrait recevoir une/des consignes d'autres types, position et/ou vitesse et/ou accélération. Lors de ces tests, on applique une consigne de position qui est telle que cela correspond à requérir que l'axe tourne à vitesse constante. On rappelle que la vitesse est la dérivée de la position et cela signifie que la consigne de position imposée au système est une rampe.

Sous ces conditions de consigne de position qui est une rampe, les erreurs du codeur se manifestent par des perturbations quasi-périodiques sur le plan temporel du fait de la vitesse de l'axe obtenue qui est quasi-constante et de la périodicité de la perturbation issue des erreurs du codeur angulaire.

On suppose que le système et sa la loi de commande possèdent à eux deux systématiquement au moins deux intégrateurs, ce qui permet un suivi de la consigne de vitesse sans erreur de trainage selon le théorème de la valeur finale. Notons $\omega_r$ la vitesse de rotation de l'axe (en rad/s), on a alors :

$$y_m(t) = \omega_r t + y(0) + d(t) \tag{6}$$

où $d(t)$ est l'ensemble des perturbations de l'axe ramenées sur $y(t)$ et avec $d(t)$ qui est de moyenne nulle.

Sous ces conditions, on peut écrire :

$$d_c(t) \approx \sum_{k=1}^{N} [a_k \cos(y(t)) + b_k \sin(y(t))] + d'(t) \tag{7}$$

où $d'(t)$ est un terme de moyenne nulle que l'on négligera par la suite.

On remarque, à partir de la forme de la courbe de la fonction de sensibilité directe typique représentée figure 4, que $\left| \frac{1}{1+C(e^{i\omega})G(e^{i\omega})} \right|$ tend vers 1 en haute fréquence si le gain du système en boucle ouverte est suffisamment proche de 0 ce qui nécessite un affaiblissement (« roll-off ») significatif du correcteur en haute fréquence.

On en déduit que pour des valeurs de $k\omega_r$ suffisamment élevées, la fonction de sensibilité directe a pour le module $\left. \left| \frac{1}{1+C(e^{i\omega})G(e^{i\omega})} \right| \right|_{k\omega_r} \approx 1$, et l'effet «boucle fermée» est alors négligeable à ces fréquences hautes et on se retrouve à ces fréquences comme si la boucle avait été ouverte alors qu'elle est physiquement fermée. Cependant, il n'en va pas de même pour les harmoniques de rangs peu élevés dans la formule (7), donc pour des fréquences plus basses ne permettant pas cette « ouverture de la boucle », et qui sont ceux que l'on cherche à estimer en priorité du fait qu'ils sont prépondérants du point de vue de leur puissance.

Aussi, pour s'affranchir de façon robuste de l'effet de la fonction de sensibilité directe $S_{y_m d_c}$, on propose de synthétiser pour chaque vitesse de rotation $\omega_r$ un correcteur spécifique noté $C_{\omega_r}(q) = \frac{R_{\omega_r}(q)}{S_{\omega_r}(q)}$ qui soit tel qu'il « ouvre la boucle » localement dans le domaine fréquentiel à la fréquence fondamentale $\omega_r$ et de ses premiers harmoniques $k\omega_r$, $k \in \mathbb{N}$, $1 < k \le N_l$, $N_l$ étant le rang maximal des harmoniques que l'on cherche à estimer. Ce rang maximal $N_l$ correspond en pratique aux premiers harmoniques contribuant à un niveau d'erreur non négligeable et qui, on le verra, sera tel que l'harmonique de rang maximal, $N_l\omega_r$, soit inférieur ou égal à une fréquence maximale $\omega_{high}$.

$$\left. \left| C_{\omega_r}(e^{j\omega}) \right| \right|_{\substack{\omega=k\omega_r \\ 1 \le k \le N_l}} = 0$$

Si $C_{\omega_r}(q)$ ouvre la boucle aux fréquences $\omega_r$, $2\omega_r \cdots N_l\omega_r$ alors par définition et, ainsi,

$$\left. \left| \frac{1}{1+C(e^{i\omega})G(e^{i\omega})} \right| \right|_{\substack{\omega=k\omega_r \\ 1 \le k \le N_l}} = 1$$

on a de façon robuste pour le module de la fonction de sensibilité directe,

Sous ces conditions, les composantes fréquentielles de $d_c(t)$ (erreur de codeur) de fréquences $\omega = k\omega_r$, $1 \le k \le N_l$ ont un effet direct sur $y_m(t)$, sans être affecté par la fonction de sensibilité directe.

Aussi, pour un test effectué à vitesse de consigne constante connue $\omega_r$, on pourrait mettre en œuvre un correcteur ayant un gain présentant des encoches aux fréquences $k\omega_r$.

Cependant, contrairement à ce qu'on pourrait penser de prime abord, il ne suffit pas de rajouter des filtres coupes-bandes aux fréquences multiples de $\omega_r$ : En effet forcer un gain nul du correcteur à une fréquence donnée revient, on l'a vu plus haut, à forcer la fonction de sensibilité directe $S_{y_md_c}$ à avoir un gain égal à 1 à ces fréquences. Or il est bien connu que le module de la fonction de sensibilité directe $\left|S_{y_md_c}\left(e^{j\omega}\right)\right| = \left|\dfrac{1}{1+C(e^{i\omega})G(e^{i\omega})}\right|$ est soumis à un principe de conservation découlant du théorème de Bode qui dans le cas où la boucle ouverte ne possède pas de pôle instable s'écrit :

$$\int_{-\frac{\pi}{T_e}}^{+\frac{\pi}{T_e}} log \left|\frac{1}{1+C(e^{i\omega})G(e^{i\omega})}\right| d\omega = 0 \qquad (8)$$

Et donc, avec un tel filtrage, le forçage de $\left|\dfrac{1}{1+C(e^{i\omega})G(e^{i\omega})}\right|$ à 1 à une fréquence donnée entraine une altération de cette fonction de sensibilité directe à d'autres fréquences, et en particulier peut entraîner une augmentation, qui peut être inacceptable pour la robustesse de la boucle fermée, de ce module de la fonction de sensibilité directe, en réduisant en particulier la marge de module. On rappelle que la marge du module est l'inverse du maximum de $|S_{y_md_c}(e^{j\omega})|$.

Pour cette raison, il est nécessaire de mettre en œuvre autre une méthode de synthèse de correcteur, qui permette « d'ouvrir la boucle » aux fréquences $k\omega_r$ qui présentent un intérêt pour la caractérisation de l'erreur du codeur $d_c$(t), tout en conservant par ailleurs une bonne robustesse en termes de marges statiques et dynamiques. Il existe plusieurs méthodes de synthèse de correcteur pouvant être employées pour parvenir à ce résultat.

Une méthode adaptée est la commande H-infini, par application de la méthode dites des sensibilités mixtes qui consiste à imposer des gabarits dans le domaine fréquentiel sur les gains des diverses fonctions de sensibilité de la boucle, l'algorithme de synthèse se chargeant de trouver un correcteur qui satisfasse au mieux ces diverses contraintes. Cette méthode est parfaitement utilisable et appropriée dans le présent contexte. On pourra à ce sujet consulter l'ouvrage de D. Alazard et al. Intitulé « Robustesse et commande optimale » CEPADUES 1999. On préfère cependant décrire ici une méthode de synthèse de correcteur RST par placement de pôles robustes qui a l'avantage d'offrir le meilleur compromis simplicité sur performances.

Dans ce qui suit, on ne s'attarde pas sur le calcul du bloc $T(q)$ dans la mesure où il n'affecte pas les performances de la boucle du point de vue de la régulation. Ce type de calcul est connu et on pourra consulter par exemple l'ouvrage de I.D. Landau « Commande des systèmes » Hermès 2002.

Ainsi le problème de la synthèse du correcteur se résume quasiment à la synthèse des polynômes $R(q)$ et $S(q)$ qui sont les inconnues du problème.

Ces polynômes sont obtenus par la résolution d'une équation de Bézout :

$$A(q)S(q) + B(q)R(q) = P(q) \qquad (9)$$

Le polynôme P(q) qui est le polynôme caractéristique de la boucle fermée, est le produit de trois polynômes moniques tel que

$$P(q) = P_o(q)P_c(q)P_r(q)$$

avec : $d^o(P_o) = d^o(A) + 1$, $d^o(P_c) = d^o(B)$.

Par ailleurs, on impose des parties fixes à $S(q)$ et $R(q)$ avec :

$$S(q) = H_s(q)S'(q) \text{ et } R(q) = H_r(q)R'(q), \text{ avec } d^o(H_r) = d^o(P_r).$$

Afin de rejeter les perturbations statiques, on impose aussi une action intégrale dans le correcteur ce qui revient à prendre $H_s(q) = q - 1$.

Par ailleurs, l'opérateur de transfert $\dfrac{H_r(q)}{P_r(q)}$ est la mise en série de dipôles résonants du second ordre

$$\frac{H_r(q)}{P_r(q)} = \frac{H_{r1}(q)}{P_{r1}(q)} \cdot \frac{H_{r2}(q)}{P_{r2}(q)} \cdots \frac{H_{rN_l}(q)}{P_{rN_l}(q)}$$

où $\frac{H_{rk}(z)}{P_{rk}(z)}$ est la transformée en z du dipôle résonant continu :

$$\frac{\frac{s^2}{(k\omega_r)^2} + 2\frac{\xi_{nk}}{(k\omega_r)} + 1}{\frac{s^2}{(k\omega_r)^2} + 2\frac{\xi_{dk}}{(k\omega_r)} + 1}$$

avec $0 \leq \xi_{nk} < 1$, $0 < \xi_{dk} \leq 1$, de préférence $\xi_{nk}$ est choisi comme étant égal à 0 ou très proche.

Cette méthode consistant à ouvrir la boucle à des fréquences prédéterminées est décrite dans l'ouvrage de I.D. Landau « Commande des systèmes » Hermès 2002. On peut noter que cette méthode est duale de celle consistant à rejeter des perturbations harmoniques à une ou des fréquences données, qui ont fait l'objet d'un dépôt de brevet EP 2116912 sous le titre « Method and device for robust periodic disturbance rejection in an axis position loop ». Néanmoins, l'objectif de la présente demande est de rendre le correcteur totalement aveugle aux perturbations sinusoïdales, alors que, au contraire, dans le brevet EP 2116912, le correcteur doit réagir parfaitement à ces perturbations pour les compenser totalement. Et donc l'objectif de la présente demande est antagoniste par rapport à celui de la demande EP 2116912.

Par ailleurs, le choix des polynômes $P_o(q), P_c(q)$ se fait, de préférence, par l'application des méthodologies dites « ppa » et « ppb » et décrite dans l'ouvrage « Automatique appliquée » Hermès 2009 de Philippe de Larminat. Ces fonctions possèdent des paramètres de réglage permettant d'arbitrer les compromis inhérents à la synthèse du correcteur.

On va maintenant détailler la procédure d'identification.

Comme mentionné plus haut, les ondulations de couple $d_m(t)$ dont l'expression est donnée dans la formule (2), se manifestent au travers de la fonction de sensibilité $S_{y_m d_m}(q) = \frac{G(q)}{1+C(q)G(q)}$, mais grâce à « l'ouverture de la boucle » aux fréquences $k\omega_r, 1 \leq k \leq N_l$, et qui est obtenue par une synthèse de correcteur configuré pour la vitesse à laquelle l'axe tourne provoquant le forçage de $\left|\frac{1}{1+C(e^{i\omega})G(e^{i\omega})}\right|$ à 1, aux fréquences $\omega_r, 2\omega_r...$ on a de façon robuste $S_{y_m d_m}(e^{i\omega}) = G(e^{i\omega})$.

Or, on sait, comme déjà mentionné, que pour une zone assez large de fréquences de rotation des axes des appareils rotatifs de précision, tels que les simulateurs de mouvements et les centrifugeuses, le gain $|G(e^{i\omega})| = \left|\frac{B(e^{i\omega})}{A(e^{i\omega})}\right|$ de la fonction de transfert des axes de ces appareils peut être considéré, dans une plage fréquentielle assez large, comme celui d'un double intégrateur, c'est-à-dire avec une décroissance de 40 dB/décade, et la fonction de transfert correspondante possède dans cette plage fréquentielle, une phase quasi-constante de -180°. En revanche, en basse fréquence de rotation, le gain de cette fonction de transfert s'écarte de ce modèle très simple avec une pente du modèle qui tend à décroitre seulement de 20dB/décade, ceci du fait des frottements visqueux. En outre, en haute fréquence, des résonances et antirésonances apparaissent, qui modifient également la décroissance du gain de la fonction de transfert.

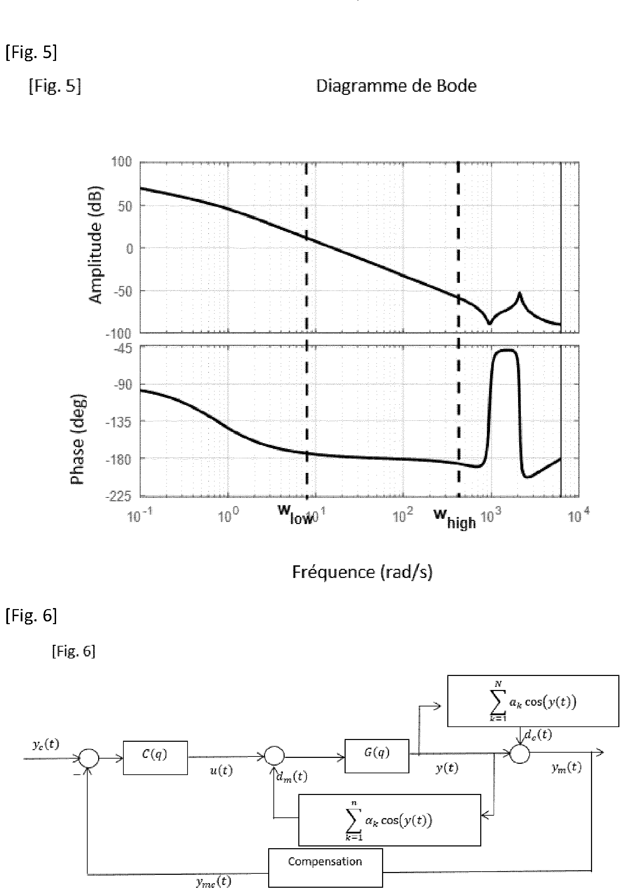

A titre d'exemple, on représente dans la figure 5 un exemple de diagramme de Bode de la fonction de transfert $G(z) = \frac{B(z)}{A(z)}$ d'un tel appareil ainsi que les fréquences minimales $\omega_{low}$ et $\omega_{high}$ entre lesquelles la fonction de transfert de ces appareils a sensiblement les propriétés de celles d'un double intégrateur.

Ainsi sous l'hypothèse que les fréquences $k\omega_r, k \in \mathbb{N}, 1 \leq k \leq N_l$ fondamentale $(\omega_r)$ et des harmoniques des ondulations de couple sont comprise dans la plage $[\omega_{low}, \omega_{high}]$, on peut considérer que l'ondulation de couple/« cogging » $d_m(t)$ affecte $y(t)$ par l'effet d'un filtrage d'un double intégrateur.

Si l'on nomme $y_T(t)$ l'effet des ondulations de couple/« cogging » auquel s'ajoute l'effet des perturbations du codeur rapporté sur la mesure de position pour des vitesses de rotation constantes telles que $\omega_{low} \leq k\omega_r \leq \omega_{high}, k \in \mathbb{N}, 1 \leq k \leq N_l$, alors on peut modéliser la position mesurée (en faisant l'hypothèse d'une vitesse constante ou quasi-constante), :

$$y_m(t) = y_T(t) + \bar{y}(t) + d''(t) \qquad (10)$$

où $\bar{y}(t)$ serait la position physique du moteur si elle n'était pas perturbée par les ondulations de couple, et $d''(t)$ un terme de perturbations centrées et avec : $y_T(t)$ ≈

$$\sum_{k=1}^{N_l} \frac{\alpha'_k}{(k\omega_r)^2} \cos(y(t)) + \frac{\beta'_k}{(k\omega_r)^2} \sin(y(t)) + \sum_{k=1}^{N}[a_k \cos(y(t)) + b_k \sin(y(t))] \quad (11)$$

On voit donc qu'à consigne de vitesse d'axe constante, il existe une relation linéaire impliquant les coefficients $a_k$, $b_k$, $\alpha'_k, \beta'_k$ , que l'on peut écrire :

$$y_m(t) = \varphi(t)\theta + \bar{y}(t) + d''(t) \qquad (12)$$

le terme $d''(t)$ étant un terme de perturbation centré et avec :

$$\varphi(t) = \begin{bmatrix} \cos{(y(t))} & \sin{(y(t))} & \cos{(2y(t))} & \sin{(2y(t))} & \cdots \\ \cdots \frac{1}{(\omega_r)^2}\cos{(y(t))} & \frac{1}{(\omega_r)^2}\sin{(y(t))} & \frac{1}{(2\omega_r)^2}\cos{(2y(t))} & \frac{1}{(2\omega_r)^2}\sin{(2y(t)}) & \cdots \end{bmatrix}$$

que l'on approxime par (du fait du faible écart entre $y_m(t)$ et $y(t)$ et du caractère quasi-constant de la vitesse de l'axe) :

$$\varphi(t) = \begin{bmatrix} \cos{(y_m(t))} & \sin{(y_m(t))} & \cos{(2y_m(t))} & \sin{(2y_m(t))} & \cdots \\ \cdots \frac{1}{(\omega_r)^2}\cos{(y_m(t))} & \frac{1}{(\omega_r)^2}\sin{(y_m(t))} & \frac{1}{(2\omega_r)^2}\cos{(2y_m(t))} & \frac{1}{(2\omega_r)^2}\sin{(2y_m(t)}) & \cdots \end{bmatrix} \quad (13)$$

et

$$\theta^T = \begin{bmatrix} a_1 & b_1 & a_2 & b_2 & \cdots & \alpha'_1 & \beta'_1 & \alpha'_2 & \beta'_2 & \cdots \end{bmatrix} \qquad (14)$$

qui est un vecteur de paramètres caractérisant les erreurs du codeur et les ondulations de couple.

De plus, on peut définir une mesure de position centrée de $y_m(t)$ notée $y'_m(t)$ avec :

$$y'_m(t) = y_m(t) - y_c(t) - \frac{Te}{t_{max}}\sum_{t=0}^{t_{max}}\bigl(y_m(t) - y_c(t)\bigr) \qquad (15)$$

où l'on rappelle que $y_c(t)$ est la consigne de position fournie à l'asservissement et le terme de droite est une moyenne des écarts entre $y_m(t)$ et $y_c(t)$, cette soustraction ayant pour but de faire que $y'_m(t)$ soit centré. De plus, $t_{max}$ est le temps final du test, $Te$ est la durée de chaque période d'échantillonnage Auquel cas on peut écrire finalement :

$$y'_m(t) = \varphi(t)\theta + d'''(t) \qquad (16)$$

où $d'''(t)$ est un terme de perturbation centrée.

Pour une seule vitesse de rotation, indicée j, constante $\omega_{rj}$ on peut, par concaténation, écrire une relation matricielle entre les mesures de position et une fonction de paramètres caractérisant les erreurs du codeur et les ondulations de couple :

$$Y_j = \phi_j\theta + D_j \qquad (17)$$

avec

$$\phi_j = \begin{bmatrix} \varphi(0) \\ \varphi(1) \\ \vdots \\ \varphi(t_f) \end{bmatrix} \qquad Y_j = \begin{bmatrix} y'_m(0) \\ y'_m(1) \\ \vdots \\ y'_m(t_f) \end{bmatrix} \qquad (18)$$

Dans un mode de réalisation particulier, les composantes de $\varphi(t)$ dans la relation (13) peuvent faire l'objet d'un filtrage qui peut être passe-haut, passe-bas ou passe-bande. Dans un tel mode de réalisation, les composantes $y'_m(t)$

font alors l'objet du même filtrage.

On prend en compte l'ensemble des harmoniques dans la constitution des vecteurs $\varphi(t)$ de la formules (13) et $\theta$ de la formule (14), mais dans des variantes de réalisation, certaines harmoniques intermédiaires peuvent être omises dans la constitution des vecteurs $\varphi(t)$ et $\theta$.

On remarque que du fait de l'expression de $\varphi(t)$ donné en (13), la matrice $\phi_j$ n'est pas de rang plein colonne. Ce qui concrètement signifie que le vecteur $\theta$ n'est pas identifiable si on se restreint à faire un seul test du système à une seule vitesse constante $\omega_{rj}$.

En conséquence, il est préférable de faire de multiples tests du système à des vitesses constantes $\omega_{r1}$, $\omega_{r2}$, $\omega_{r3}$ ... $\omega_{rn}$, différentes, le choix des vitesses étant contraint par $\omega_{low} \le k\omega_{rj} \le \omega_{high}$ pour $1 \le k \le N_l$, j entier appartenant à [1 .. n] et n étant le nombre de tests à des vitesses constantes différentes entre elles. De préférence, n >= 2.

Le nombre $N_l$ est de préférence identique pour les différentes vitesses constantes. Pour toutes les différentes vitesses constantes, l'harmonique de rang maximal considérée dans les calculs doit donc être inférieure ou égale à la fréquence maximale $\omega_{high}$.

On peut éventuellement répéter le test plusieurs fois pour une vitesse constante donnée mais on doit répéter les tests pour plusieurs vitesses constantes différentes pour obtenir l'identifiabilité. On rappelle que dans le cas de l'exemple de consigne de position cela correspond à des consignes en rampes dont la durée peut être parfaitement contrôlée par l'utilisateur et permet des rotations sur un nombre important de tours. De préférence, lors du test, on commence les mesures pour les tests après un certain temps après le début de la rampe pour éviter de mesurer des transitoires de démarrage et que la vitesse soit stabilisée, on peut aussi partir d'une vitesse de rotation supérieure ou inférieure déjà établie pour passer à la vitesse de rotation du test pour diminuer le temps de stabilisation de la vitesse.

Par concaténation des vecteurs $Y_j$ et des matrices $\phi_j$, suite à ces tests multiples à des fréquences de rotation fondamentales différentes, on obtient une relation linéaire globale :

$$Y = \phi\theta + D \qquad (19)$$

avec :

$$Y = \begin{bmatrix} Y_1 \\ Y_2 \\ \vdots \\ Y_n \end{bmatrix} \qquad \phi = \begin{bmatrix} \phi_1 \\ \phi_2 \\ \vdots \\ \phi_n \end{bmatrix} \qquad (20)$$

Ensuite, l'estimation de $\theta$, nommée $\hat{\theta}$, se calcule en utilisant la relation des moindres carrés suivant la formule bien connue :

$$\hat{\theta} = (\phi^T\phi)^{-1}\phi^T Y \qquad (21)$$

En pratique, il est préférable de réaliser un certain nombre de tests à consigne de vitesse constante, et avec plus de deux vitesses constantes afin d'améliorer l'identifiabilité des paramètres et réduire les incertitudes sur $\hat{\theta}$.

L'intérêt de la méthode est qu'on peut multiplier le nombre de tests à vitesse constante (répéter les tests à une même fréquence donc avec une même rampe de consigne de position et/ou à des vitesses différentes donc avec des rampes différentes de consigne de position), et on peut également faire durer ces tests aussi longtemps qu'on le souhaite, de façon à augmenter de façon significative l'information disponible et ainsi réduire les incertitudes sur les paramètres estimés. Une fois que le vecteur $\hat{\theta}$ a été estimé, on peut alors élaborer un bloc de calcul de compensation des erreurs du codeurs, dont l'entrée est $y_m(t)$ et dont la sortie est une position compensée $y_{mc}(t)$, avec la relation

$$y_{mc}(t) = -\sum_{k=1}^{N} a_k \cos\big(y_m(t)\big) + b_k \sin\big(y_m(t)\big) \qquad (22)$$

et $y_{mc}(t)$ étant le signal de mesure de position compensée, qui est injecté en amont du correcteur $C(q)$ pour soustraction à $y_c(t)$, tel que dans le système représenté à la figure 6.

La compensation peut être implémentée directement, avec calculs en temps réel, à partir de la formule analytique (22), où alors à partir de tables de compensation, obtenues préalablement avec le procédé de l'invention, sur un maillage de positions angulaires avec préférablement interpolation entre les points du maillage, cette dernière solution limitant les calculs à des recherches dans les tables de compensation et préférablement à des interpolations.

Il est important de noter encore une fois, que « l'ouverture de la boucle » du système à certaines fréquences, n'est pas une opération physique/matérielle car le système reste toujours bouclé/asservi pendant les tests, mais est le résultat d'un procédé de calcul permettant d'estimer des paramètres obtenus à partir du vecteur $\hat{\theta}$. Pour obtenir cette « ouverture » immatérielle du système bouclé à certaines fréquences, pendant les tests, on place le système dans une gamme de vitesse de rotation de l'actionneur en rotation où il se comporte comme un double intégrateur, c-à-d que la courbe du gain de la fonction de transfert de l'actionneur présente une décroissance de sensiblement 40 dB/décade, ce qui « ouvre » le système, et on effectue des tests du système à plusieurs vitesses constantes de rotation dans cette gamme.

On va maintenant décrire un second mode de mise en œuvre dans lequel on détermine cette fois par itération la table de compensation à utiliser dans le système de la figure 6. Ce second mode consiste à itérer le test et le calcul de $\hat{\theta}$, décrit ci-dessus et en utilisant les résultats des précédentes itérations.

A cette fin, un premier vecteur estimé $\hat{\theta}_1$ est calculé à partir de la procédure décrite ci-dessus, après quoi on introduit dans le système la première compensation obtenue par ce premier calcul et on réalise une seconde série de tests toujours à des vitesses constantes avec le système comportant la première compensation. On obtient alors par calcul un second vecteur estimé $\hat{\theta}_2$, et on introduit dans le système une compensation qui est établie sur le vecteur $\hat{\theta}_1 + \hat{\theta}_2$ pour d'éventuels autres tests ou pour l'utilisation du système en métrologie par exemple. Cette procédure itérative de tests et de calculs de vecteur estimé $\hat{\theta}_3, \hat{\theta}_4...$ peut se poursuivre en permettant d'établir des vecteurs $\hat{\theta}_1 + \hat{\theta}_2 + \hat{\theta}_3$ ... pour le bloc de calcul de compensation. On peut arrêter l'itération au bout d'un nombre prédéterminé d'itérations ou fixer un critère d'arrêt basé sur la valeur du vecteur estimé lors de l'itération courante, celui-ci ayant des valeurs convergente.

On comprend que dans le cadre de cette méthode par itération, la détermination préalable de la plage [$\omega_{low}$, , $\omega_{high}$] n'est effectuée qu'une seule fois et n'a pas besoin d'être répétée à chaque itération des phases de tests et du calcul des paramètres caractérisant les erreurs du codeur et les ondulations de couple par résolution de la relation matricielle globale.

On va maintenant décrire une variante de calcul de l'estimation de $\theta$, nommée $\hat{\theta}$, qui n'utilise pas la formule des moindres carrés mais utilise une méthode de régularisation qui consiste à déterminer $\hat{\theta}$ en utilisant le calcul suivant :

$$\hat{\theta} = (\phi^T \phi + H)^{-1} \phi^T Y \tag{23}$$

où H est une matrice carrée définie positive de la taille de $\phi^T \phi$. Cette manière de procéder présente l'inconvénient de rajouter du biais sur les estimés $\hat{\theta}$, mais dans certains cas elle peut contribuer à réduire la variance des coefficients de $\hat{\theta}$ et donc les incertitudes dans la compensation de position.

Dans une autre variante, la méthode de synthèse du correcteur permettant « d'ouvrir la boucle » aux fréquences d'intérêt, peut se faire de façon différente de la méthode de placement de pôles développée ci-dessus. On peut en particulier mettre en œuvre une commande Hinfini.

Dans un mode de réalisation particulier de l'invention, on peut déterminer le vecteur $\hat{\theta}$ suivant la procédure décrite plus haut et en utilisant des mesures d'erreurs de position du codeur obtenues par une méthode de mesure optique et de telle sorte que ces mesures optiques réalisées sur un nombre fini de positions soient hybridées avec les données collectées et rassemblées dans le vecteur $Y$. Cette méthode optique de mesure d'erreurs de position du codeur utilise l'interférométrie et peut donc être très précise.

Sous l'hypothèse que $n_p$ mesures d'erreur $e_i$ des codeurs pour $i \in [1, \cdots n_p]$ ont été réalisées au moyen de la méthode optique de mesure, ceci pour $n_p$ positions de l'axe notées $y_i^*$, $i \in [1, \cdots n_p]$, ces erreurs mesurées peuvent être

$$E_c = \begin{bmatrix} e_1 \\ e_2 \\ \vdots \\ e_{n_p} \end{bmatrix}$$

rassemblées dans un vecteur. On peut construire une matrice $C$ de taille $(n_p, 2(N_l + N))$ telle que

$$C = \begin{bmatrix} \cos(y_1^*) & \sin(y_1^*) & \cdots & \cos(Ny_1^*) & \sin(Ny_1^*) & 0_{1,N_l} \\ \vdots & \vdots & \vdots & \vdots & \vdots & \vdots \\ \cos(y_{n_p}^*) & \sin(y_{n_p}^*) & \cdots & \cos(Ny_{n_p}^*) & \cos(Ny_{n_p}^*) & 0_{1,N_l} \end{bmatrix}$$

On rappelle que $N_l$ est le rang maximal des harmoniques modélisant les ondulations de couple et $N$ le rang maximal d'harmonique d'une décomposition en série de Fourier des erreurs de codeur (voir les équations 1, 2, 7 et 22).

Dans C, $0_{1,N_l}$ est une matrice d'une ligne et de $N_l$ colonnes.

Comme les incertitudes sur les mesures optiques peuvent rendues très faibles, on peut les négliger et auquel cas, l'égalité suivante est valide :$E_c = C\theta$ .

L'estimation de $\theta$ est alors un problème de minimisation d'un critère quadratique

$$J = (Y - \phi\theta)^T (Y - \phi\theta)$$

sous la contrainte égalité suivante :

$$E_c = C\theta$$

La résolution de ce problème est classique en analyse numérique (en faisant appel au Lagrangien). L'intérêt de cette méthode étant de garantir que l'estimée de l'erreur codeur issue de la procédure coïncide parfaitement aux mesures optiques en un nombre fini de points.

Enfin, on comprend que l'invention peut aussi s'appliquer à des actionneurs linéaires/en translation dans le cas où ledit actionneur comporte un organe rotatif commandé et un capteur de rotation et que le mouvement de rotation est converti en mouvement de translation.

## Revendications

1. Procédé d'estimation d'erreurs angulaires de codeurs angulaires pour un système bouclé comportant au moins un actionneur en rotation d'un axe et un codeur angulaire produisant un signal de mesure de position dudit axe, et comportant un dispositif de calcul pour au moins commander ledit actionneur,

   le dispositif de calcul recevant, d'une part, un signal de consigne en entrée du système, notamment un signal de consigne de position $y_c(t)$ et, d'autre part, le signal de mesure, pour bouclage du système, l'actionneur en rotation générant des ondulations de couple $d_m(t)$, le codeur produisant des erreurs de codeur $d_c(t)$ qui, pour un signal de consigne $y_c(t)$ qui correspond à une rotation de l'axe à vitesse supposée constante $\omega_r$, ont un spectre constitué de la fréquence de rotation fondamentale $\omega_r$ et de ses harmoniques $k\omega_r$, $k \in \mathbb{N}$ le dispositif de calcul calculant dans un correcteur un signal de commande,
   **caractérisé en ce que**,
   dans une phase de test, on synthétise, pour une vitesse de rotation indicée $j$, $\omega_{rj}$ supposée constante, un correcteur spécifique $C_{\omega rj}(q)$ de ladite vitesse de rotation $\omega_{rj}$ constante, ledit correcteur $C_{\omega rj}(q)$ étant tel que pour le domaine fréquentiel comprenant la fréquence fondamentale $\omega_{rj}$ et un nombre déterminé de ses premiers harmoniques $k\omega_{rj}$, $k \in \mathbb{N}$, $1 < k \le N_l$, le correcteur présentant un gain sensiblement nul à ces fréquences $\omega_{rj}$, $k\omega_{rj}$ ce qui entraîne une ouverture de la boucle auxdites fréquences et on établit une relation matricielle entre les mesures de position et une fonction de paramètres caractérisant les erreurs du codeur et les ondulations de couple, sur le système avec le correcteur spécifique et à la vitesse de rotation $\omega_{rj}$ constante,
   on répète un nombre $n$ déterminé de fois la phase de test avec des consignes de rotation à vitesse supposée constante différentes $\omega_{rj}$ où, $j \in \mathbb{N}$, $1 < j \le n$,
   on concatène les relations matricielle afin d'obtenir une relation matricielle globale identifiable,
   on estime les paramètres caractérisant les erreurs du codeur et les ondulations de couple par résolution de la relation matricielle globale.

2. Procédé selon la revendication 1, dans lequel, en outre, une fois les paramètres caractérisant les erreurs du codeur et les ondulations de couple estimés, le dispositif de calcul est configuré pour l'exécution en temps réel du calcul d'un signal de compensation des erreurs du codeurs afin de compenser les erreurs du codeur.

3. Procédé selon la revendication 1 ou la revendication 2, dans lequel on détermine préalablement une plage [$w_{low}$, $\omega_{high}$] de fréquence de rotation de l'actionneur dans laquelle le module de la fonction de transfert de l'axe présente une décroissance de sensiblement 40 dB/décade, et dans les phases de test, on choisit en outre les différentes vitesses de rotation $\omega_{rj}$ afin que chaque vitesse de rotation constante $\omega_{rj}$ et ses $N_l$ harmoniques $k\omega_{rj}$ soient comprises dans la plage [$\omega_{low}$, $\omega_{high}$].

4. Procédé selon la revendication 3, dans lequel on détermine la plage [$\omega_{low}$, $\omega_{high}$] de fréquence de rotation de l'actionneur dans laquelle la fonction de transfert de l'axe présente une décroissance de sensiblement 40 dB/décade par une méthode choisie parmi :

une méthode graphique utilisant la courbe du gain $G\left(e^{i\omega}\right) = \left|\frac{B(e^{i\omega})}{A(e^{i\omega})}\right|$ de la fonction de transfert de l'axe et on détermine une borne inférieure $\omega_{low}$ et une borne supérieure $\omega_{high}$ de fréquences encadrant une zone de la courbe ayant une décroissance de sensiblement 40 dB/décade,

une méthode d'identification notamment paramétrique.

5. Procédé selon l'une quelconque des revendications 1 à 4, dans lequel dans la phase de test, la consigne en entrée du système est un signal de consigne de position $y_c(t)$ en rampe, ou un signal de consigne de vitesse constante.

6. Procédé selon l'une quelconque des revendications 1 à 5, dans lequel le correcteur est synthétisé soit par une méthode des sensibilités mixtes sur une commande H-infini, soit par une méthode de placement de pôles robustes sur correcteur RST.

7. Procédé selon l'une quelconque des revendications 1 à 6, dans lequel la relation matricielle entre les mesures de position et une fonction de paramètres caractérisant les erreurs du codeur et les ondulations de couple s'exprime par :

$$Y_j = \phi_j \theta + D_j$$

avec $\phi_j = \begin{bmatrix} \varphi(0) \\ \varphi(1) \\ \vdots \\ \varphi(t_f) \end{bmatrix} \qquad Y_j = \begin{bmatrix} y'_m(0) \\ y'_m(1) \\ \vdots \\ y'_m(t_f) \end{bmatrix}$

où $Y_j$ est un vecteur de mesures de position centrée de coefficients $y'_m(t)$, et

$$\varphi(t) = [\cos{(y_m(t))} \quad \sin{(y_m(t))} \quad \cos{(2y_m(t))} \quad \sin{(2y_m(t))} \quad \cdots$$
$$\cdots \frac{1}{(\omega_r)^2}\cos{(y_m(t))} \quad \frac{1}{(\omega_r)^2}\sin{(y_m(t))} \quad \frac{1}{(2\omega_r)^2}\cos{(2y_m(t))} \quad \frac{1}{(2\omega_r)^2}\sin{(2y_m(t)}\ )\quad \cdots]$$

et

$\theta^T = [a_1 \quad b_1 \quad a_2 \quad b_2 \quad \cdots \quad \alpha'_1 \quad \beta'_1 \quad \alpha'_2 \quad \beta'_2 \quad \cdots]$ vecteur transposé des paramètres caractérisant les erreurs du codeur et les ondulations de couple, et

$D_j$ un vecteur de termes de perturbation centrée.

8. Procédé selon la revendication 7, dans lequel les composantes $\varphi(t)$ de $\phi_j$ et les composantes $y'_m(t)$ de $Y_j$ sont filtrées, le filtrage pouvant être passe-haut ou passe-bas ou passe-bande.

9. Procédé selon la revendication 7 ou la revendication 8, dans lequel la relation matricielle globale identifiable $Y = \phi\theta + D$ avec :

$$Y = \begin{bmatrix} Y_1 \\ Y_2 \\ \vdots \\ Y_n \end{bmatrix} \qquad \phi = \begin{bmatrix} \phi_1 \\ \phi_2 \\ \vdots \\ \phi_n \end{bmatrix}$$

est employée pour produire une estimation $\hat{\theta}$ des paramètres caractérisant les erreurs du codeur et les ondulations de couple par régression linéaire et application d'une relation des moindres carrés selon $\hat{\theta} = (\phi^T\phi)^{-1}\phi^T Y$.

10. Procédé selon la revendication 7 ou la revendication 8, dans lequel la relation matricielle globale identifiable $Y = \phi\theta + D$ avec :

$$Y = \begin{bmatrix} Y_1 \\ Y_2 \\ \vdots \\ Y_n \end{bmatrix} \qquad \phi = \begin{bmatrix} \phi_1 \\ \phi_2 \\ \vdots \\ \phi_n \end{bmatrix}$$

est employée pour produire une estimation $\hat{\theta}$ des paramètres caractérisant les erreurs du codeur et les ondulations de couple et avec une méthode de régularisation utilisant la relation suivante :

$$\hat{\theta} = (\phi^T \phi + H)^{-1} \phi^T Y$$

où *H* est une matrice carrée définie positive de la taille de $\phi^T \phi$.

**11.** Procédé selon la revendication 7 ou la revendication 8, dans lequel on met en œuvre une méthode de mesure optique interférométrique pour les mesures des erreurs de position de codeur, lesdites mesures étant réalisées sur un nombre fini $n_p$ de positions de l'axe, et dans lequel l'estimation $\hat{\theta}$ des paramètres caractérisant les erreurs du codeur et les ondulations de couple est obtenue par minimisation d'un critère quadratique $J = (Y - \phi\theta)^T(Y - \phi\theta)$ sous la contrainte égalité $E_c = C\theta$ où *C* est une matrice telle que

$$C = \begin{bmatrix} \cos(y_1^*) & \sin(y_1^*) & \cdots & \cos(Ny_1^*) & \sin(Ny_1^*) & 0_{1,N_l} \\ \vdots & \vdots & \vdots & \vdots & \vdots & \vdots \\ \cos(y_{n_p}^*) & \sin(y_{n_p}^*) & \cdots & \cos(Ny_{n_p}^*) & \cos(Ny_{n_p}^*) & 0_{1,N_l} \end{bmatrix}$$

$y_i^*$ correspondant aux $n_p$ position des mesures sur l'axe, $i \in [1, \cdots n_p]$,
et *N* étant le rang maximal d'harmonique d'une décomposition en série de Fourrier des erreurs de codeur.

**12.** Procédé selon la revendication 9 ou la revendication 10 ou la revendication 11, dans lequel on met en œuvre un dispositif de calcul configuré pour l'exécution en temps réel dans un bloc de calcul de compensation, du calcul d'un signal de compensation des erreurs du codeurs afin de compenser les erreurs du codeur et le dispositif de calcul est configuré pour la prise en compte en temps réel des ondulations de couple, et dans lequel l'estimation $\hat{\theta}$ du vecteur $\theta$ des paramètres caractérisant les erreurs du codeur et les ondulations de couple est calculée par itération : suite à une première répétition de phases de tests et un premier calcul des paramètres caractérisant les erreurs du codeur et les ondulations de couple par résolution de la relation matricielle globale, un premier vecteur estimé $\hat{\theta}_1$ est estimé, le signal de compensation des erreurs de codeur étant ensuite calculé et les ondulations de couple étant ensuite prises en compte sur la base dudit premier vecteur estimé $\hat{\theta}_1$, on effectue sur le système ainsi compensé sur la base dudit premier vecteur estimé $\hat{\theta}_1$, lors d'une première itération, une nouvelle répétition de phases de tests et un nouveau calcul des paramètres caractérisant les erreurs du codeur et les ondulations de couple par résolution de la relation matricielle globale, un nouveau vecteur estimé $\hat{\theta}_2$ étant estimé, le signal de compensation des erreurs de codeur étant ensuite calculé et les ondulations de couple étant ensuite prises en compte sur la base de la somme du précédent vecteur estimés $\hat{\theta}_1$ et du nouveau vecteur estimé $\hat{\theta}_2$, et on effectue des itérations ultérieures sur le système compensé sur la base de la somme des précédents vecteurs estimés $\hat{\theta}_1 + \hat{\theta}_2 + \hat{\theta}_3$ ...

**13.** Procédé selon l'une quelconque des revendications 1 à 12, dans lequel le nombre $N_l$ d'harmoniques $k\omega_{rj}$ est identiques pour les n tests avec des consignes de rotation à vitesse constantes différentes $\omega_{rj}$.

**14.** Procédé selon l'une quelconque des revendications 1 à 13, dans lequel certaines harmoniques $k\omega_{rj}$ sont omises pour l'estimation des paramètres caractérisant les erreurs du codeur et les ondulations de couple.

**15.** Appareil comportant au moins un axe rotatif, ledit appareil étant un simulateur de mouvement ou une centrifugeuse et comportant un système bouclé comportant au moins un actionneur en rotation de l'axe et un codeur angulaire produisant un signal de mesure de position dudit axe, et comportant un dispositif de calcul pour au moins commander ledit actionneur, le dispositif de calcul recevant, d'une part, un signal de consigne en entrée du système, notamment un signal de consigne de position $y_c(t)$ et, d'autre part, le signal de mesure, pour bouclage du système, l'actionneur en rotation générant des ondulations de couple $d_m(t)$, le codeur produisant des erreurs de codeur $d_c(t)$ qui, pour un signal de consigne $y_c(t)$ qui correspond à une rotation de l'axe à vitesse supposée constante $\omega_r$, ont un spectre constitué de la fréquence de rotation fondamentale $\omega_r$ et de ses harmoniques $k\omega_r$, $k \in \mathbb{N}$, le dispositif de calcul calculant en outre dans un correcteur un signal de commande de consigne destiné à corriger les erreurs de codeur, **caractérisé en ce que** le dispositif de calcul est configuré pour l'exécution du procédé de l'une quelconque des revendications 1 à 14.

**Patentansprüche**

1. Verfahren zum Abschätzen von Winkelfehlern von Winkelkodierern für ein geschlossenes System mit mindestens einem actionneur en rotation einer Achse und einem ein Meßsignal der Position der Achse erzeugendem Winkelkodierer und mit einer Rechenvorrichtung, um mindestens den besagten actionneur zu steuern,

   wobei die Rechenvorrichtung einerseits am Eingang des Systems ein Sollsignal, insbesondere ein Positionssollsignal yc(t), und andererseits das Meßsignal zum Schließen des Systems empfängt, wobei der actionneur en rotation Drehmomentwellungen dm(t) erzeugt, wobei der Kodierer Kodierfehler dc(t) erzeugt, die für ein Sollsignal yc(t), das einer Drehung der Achse mit einer als konstant angenommenen Geschwindigkeit entspricht, ein aus der Drehungsgrundfrequenz und deren Harmonischen bestehendes Spektrum aufweisen, wobei die Rechenvorrichtung in einem Korrektor ein Steuersignal berechnet,
   **dadurch gekennzeichnet, daß**
   in einer Testphase für eine indizierte als konstant angenommene Drehgeschwindigkeit ein spezifischer Korrektor der konstanten Drehgeschwindigkeit synthetisiert wird, wobei der Korrektor so ist, daß der Korrektor für den die Grundfrequenz beinhaltenden Frequenzbereich und eine bestimmte Zahl von deren Harmonischen einen im Wesentlichen gleich Null großen Gewinn aufweist, was ein Öffnen der Schleife für die besagten Frequenzen nach sich zieht, und es wird ein matrizielles Verhältnis zwischen den Positionsmessungen und einer Parameterfunktion eingerichtet, die die Fehler des Kodierers und die Drehmomentwellungen im System mit dem spezifischen Korrektor und bei der konstanten Drehgeschwindigkeit charakterisiert,
   eine bestimmte Anzahl Male die Testphase mit unterschiedlichen Vorgaben für die konstant angenommenen Drehgeschwwindigkeit wiederholt wird ......,
   die matriziellen Verhältnisse concatené werden, um ein globales identifizierbares matrizielles Verhältnis zu erhalten,
   die Parameter abgeschätzt werden, die die Kodierfehler und die Drehmomentwellungen durch Lösen des globalen matriziellen Verhältnisses charakterisieren.

2. Verfahren gemäß Anspruch 1, wobei dann außerdem, wenn die Fehler des Kodierers und die Drehmomentwellungen charakterisiert sind, die Rechenvorrichtung zur Durchführung des Berechnensss eines Kompensationssignals der Fehler des Kodierers in Echtzeit konfiguriert wird, um die Fehler des Codierers auszugleichen.

3. Verfahren gemäß Anspruch 1 oder Anspruch 2, wobei zuvor ein Bereich für die Drehfrequenz des Aktioneurs bestimmt wird, in dem das Modul der Transferfunktion der Achse ein Abnehmen um ungefähr 40 dB/Dekade aufweist und in den Testphasen außerdem die verschiedenen Drehgeschwindigkeiten ausgewählt werden, damit jede konstante Drehgeschwindigkeit und deren Harmonische in dem Bereich einbezogen sind.

4. Verfahren gemäß Anspruch 3, wobei der Drehfrequenzbereich des Aktionneurs bestimmt wird, in dem die Transferfunktion eine Abschwächung von im Wesentlichen 40 dB/Dekade durch ein Verfahren aufweist, das aus den folgenden ausgewählt ist:

   ein graphisches Verfahren, das die Gewinnkurve der Transferfunktion benutzt und bei dem eine obere und eine untere Frequenzgrenze benutzt werden, die einen Bereich der Kurve umfassen, der eine Abschwächung von im Wesentlichen 40 dB aufweist,
   ein insbesondere grapisches Identifizierungsverfahren.

5. Verfahren gemäß einem der Ansprüche 1 bis 4, wobei in der Testphase die Vorgabe am Eingang des Systems ein Positionsvorgabesignal yc(t) en rampe oder ein Vorgabesignal für konstante Geschwindigkeit ist.

6. Verfahren gemäß einem der Ansprüche 1 bis 5, wobei der Korrektor entweder durch ein Verfahren gemischter Empfindlichkeiten auf einer H-infini - Steuerung oder durch ein Verfahren des Setzens robuster Pole auf dem RST-Korrektor synthetisiert wird.

EP 4 150 301 B1

7. Verfahren gemäß einem der Ansprüche 1 bis 6, wobei das matrizielle Verhältnis zwischen den Positionsmessungen und einer Parameterfunktion, die die Fehler des Kodierers und die Drehmomentwellungen charakterisiert, durch mit ausgedrückt wird, wobei Yj ein Vektor von Messungen zentrierter Positionen mit Koeffizienten y'm(t) und ............................................. ist, und .................................. ein transponierter Vektor von Parametern ist, der die Fehler des Kodierers und die Drehmomentwellungen charakerisiert, und Dj ein Vektor de termes de pertrbation centrée ist, .

8. Verfahren gemäß Anspruch 7, wobei die Komponenten von und die Komponenten von gefiltert werden, wobei das Filtern ein Hochpaßfiltern, ein Tiefpaßfiltern oder ein Bandpaßfiltern sein kann.

9. Verfahren gemäß Anspruch 7 oder Anspruch 8, wobei das identifizierbare globale matrizielleVerhältnis ........... mit ............................... dazu verwendet wird, eine Abschätzung der Parameter vorzunehmen, die die Fehler des Kodierers und die Drehmomentwellungen durch lineares Zurückgehen und Anwenden eines Verhältnisses der kleinsten Quadrate gemäß charakterisieren.

10. Verfahren gemäß Anspruch 7 oder Anspruch 8, wobei das identifizierbare globale matrizielle Verhältnis ........ mit ......... dazu verwendet wird, eine Abschätzung der Parameter vorzunehmen, die die Fehler des Kodierers und die Drehmomentwellungen charakterisieren und mit einem Verfahren der Regularisation mittels der folgenden Beziehung : ...................., wobei H eine definierte positive quadratische Matrix er Größe ist...

11. Verfahren gemäß Anspruch 7 oder Anspruch 8, wobei ein interferometrisches optisches Meßverfahren für die Messungen der Positionsfehler des Kodierers durchgeführt wird, wobei die Messungen an einer endlichen Anzahl Positionen der Achse erfolgen, und wobei die Schätzung der Parameter, die die Fehler des Kodierers und die Drehmomentwellungen charakterisieren, durch Minimierung eines quadratischen Kriteriums unter der Bedingung der Gleichheit ........................ eine Matrix ist (????) so daß .............

   wobei yi* den np Positionen der Messungen auf der Achse entsprechen
   und N der maximale Rang der Harmonischen einer décomposition en série de Fourrier der Fehler des Kodierers ist.

12. Verfahren gemäß Anspruch 9 oder Anspruch 10 oder Anspruch 11, wobei eine Rechenvorrichtung angewendet wird, die dazu ausgelegt ist, in Echtzeit in einem Kompensationsrechenblock die Berechnung eines Signals zur Kompensation der Fehler des Kodierers durchzuführen, um die Fehler des Kodierers zu kompensieren, und die Rechenvorrichtung dazu ausgelegt ist, in Echtzeit die Drehmomentwellungen zu berücksichtigen, und wobei die Schätzung des Vektors der Parameter, die die Fehler des Kodierers und die Drehmomentwellungen charakterisieren, durch Iteration berechnet wird: nach einer ersten Wiederholung von Testphasen und einer ersten Berechnung der die Fehler des Kodierers und der Drehmomentwellungen charakterisierenden Parameter durch Lösen des globalen matriziellen Verhältnisses wird ein erster geschätzter Vektor geschätzt, wobei das Signal zum Kompensieren der Fehler des Kodierers anschließend berechnet wird und die Drehmomentwellungen anschließend auf der Grundlage des ersten geschätzten Vektors berücksichtigt werden; an dem so auf der Grundlage des ersten geschätzten Vektors bei einer ersten Iteration kompensierten System werden eine neue Wiederholung der Testphasen und eine neue Berechnung der die Fehler des Kodierers und der Drehmomentwellungen charakterisierenden Parameter durch Lösen des globalen matriziellen Verhältnisses durchgeführt, wobei ein neuer geschätzter Vektor geschätzt wird, das Signal zum Kompensieren der Fehler des Kodierers berechnet werden und die Drehmomentwellungen anschließend auf der Grundlage der Summe des vorangehenden geschätzten Vektors und des neuen geschätzten Vektors berücksichtigt werden, und wobei weitere Iterationen an dem kompensierten System auf der Grundlage der Summe der vorangehenden geschätzten Vektoren ausgeführt werden.

13. Verfahren gemäß einem der Ansprüche 1 bis 12, wobei die Zahl der Harmonischen bei den n Testen mit Drehungsvorgaben bei unterschiedlichen konstanten Geschwindigkeiten identisch ist.

14. Verfahren gemäß einem der Ansprüche 1 bis 13, wobei gewisse Harmonische bei der Schätzung der Parameter, die die Kodierfehler und die *Drehmomentwellungen* charakterisieren, weggelassen werden.

15. Gerät mit mindestens einer Drehachse, wobei das Gerät ein Bewegungssimulator oder eine Zentrifuge ist und ein geschlossenes System aufweist, das mindestens einen *Betätiger* zum in Drehung Versetzen der Achse und einen Winkelkodierer, der ein Meßsignal der Position der Achse erzeugt, aufweist und eine Rechenvorrichtung aufweist, um mindestens den *Aktionär* zu steuern, wobei die Rechenvorrichtung einerseits ein Anweisungssignal am Eingang des Systems, insbesondere ein *Positionsanweisungssignal* $y_c(t)$, und andererseits das Meßsignal zum Schließen des Systems empfängt, wobei der *Betätiger* zum in Drehung Versetzen Drehmomentwellungen $d_m(t)$ erzeugt, wobei der Kodierer Kodierfehler $d_c(t)$ erzeugt, die für ein Weisungssignal $y_c(t)$, das einer Drehung der Achse mit abgenommen konstanter Geschwindigkeit entspricht, ein Spektrum aufweisen, das aus der Grunddrehfrequenz und deren Harmonischen besteht, wobei die Rechenvorrichtung außerdem in einem Korrektor ein Steuersignal berechnet, das dazu bestimmt ist, die Kodiererfehler zu berichtigen,

**dadurch gekennzeichnet, daß** die Rechenvorrichtung für die Durchführung des Verfahrens gemäß einem der Ansprüche 1 bis 14 ausgelegt ist.

Verfahren zur Schätzung von Winkelfehlern von Winkelkodierern in Präzisionsrotationsvorrichtungen Vorrichtung zur ...

**Claims**

1. A method for estimating angular errors of angle coders for a looped system including at least one actuator for rotating an axis and an angle coder producing a signal of position measurement of said axis, and including a calculation device for at least controlling said actuator,

   the calculation device receiving, on the one hand, a setpoint signal at the system input, in particular a position setpoint signal $y_c(t)$ and, on the other hand, the measurement signal, for looping the system, the rotation actuator generating torque undulations $d_m(t)$, the coder producing coder errors $d_c(t)$ which, for a setpoint signal $y_c(t)$ that corresponds to a rotation of the axis at a speed $\omega_r$ supposed to be constant, have a spectrum consisted of the

   fundamental rotation frequency $\omega_r$ and its harmonics $k\omega_r$, $k \in \mathbb{N}$, the calculating device calculating a command signal in a corrector, **characterized in that**,
   in a test phase, for a speed of rotation indexed $j$, $\omega_{rj}$ supposed to be constant, a specific corrector $C_{\omega rj}(q)$ of said constant speed of rotation $\omega_{rj}$ is synthesized, said corrector $C_{\omega rj}(q)$ being such that, for the frequency domain comprising the fundamental frequency $\omega_{rj}$ and a determined number of its first harmonics $k\omega_{rj}$, $k \in \mathbb{N}$, $1 < k \le N_l$, the corrector having a substantially zero gain at theses frequencies $\omega_{rj}$, $k\omega_{rj}$, which causes an opening of the loop at said frequencies, and a matrix relationship is established between the position measurements and a function of parameters characterizing the coder errors and the torque undulations, on the system with the specific corrector and at the constant speed of rotation $\omega_{rj}$,
   the test phase is repeated a determined number $n$ of times with different setpoints of rotation at speed $\omega_{rj}$

   supposed constant, where , $j \in \mathbb{N}$, $1 < j \le n$,
   the matrix relationships are concatenated in order to obtain an identifiable global matrix relationship,
   the parameters characterizing the coder errors and the torque undulations are estimated by solving the global matrix relationship.

2. The method according to claim 1, wherein, moreover, once estimated the parameters characterizing the coder errors and the torque undulations, the calculation device is configured for the execution in real time of the calculation of a coder error compensation signal in order to compensate for the coder errors.

3. The method according to claim 1, wherein a range $[\omega_{low}, \omega_{high}]$ of rotation frequency of the actuator in which the axis transfer function module has a decrease of substantially 40 dB/decade is previously determined, and in the test phases, the different rotation speeds $\omega_{rj}$ are further chosen in such a way that each constant rotation speed $\omega_{rj}$ and its $N_l$ harmonics $k\omega_{rj}$ are in the range $[\omega_{low}, \omega_{high}]$.

4. The method according to claim 3, wherein the range $[\omega_{low}, \omega_{high}]$ of rotation frequency of the actuator in which the axis transfer function has a decrease of substantially 40 dB/decade is determined by a method chosen among:

   a graphical method using the curve of the gain $G\left(e^{i\omega}\right) = \left| \dfrac{B(e^{i\omega})}{A(e^{i\omega})} \right|$ of the axis transfer function and a lower limit $\omega_{low}$ and an upper limit $\omega_{high}$ of frequencies surrounding an area of the curve having a decrease of substantially 40 dB/decade are determined, an identification method in particular parametric.

5. The method according to anyone of claims 1 to 4, wherein, in the test phase, the setpoint at the system input is a ramp position setpoint signal $y_c(t)$, or a constant speed setpoint signal.

6. The method according to anyone of claim 1 to 5, wherein the corrector is synthetized either by a mixed-sensitivity method on a H-infinity control, or by a robust pole placement method on RST corrector.

7. The method according to anyone of claim 1 to 6, wherein the matrix relationship between the position measurements and a function of parameters characterizing the coder errors and the torque undulations is expressed by:

$$Y_j = \phi_j \theta + D_j$$

with
$$\phi_j = \begin{bmatrix} \varphi(0) \\ \varphi(1) \\ \vdots \\ \varphi(t_f) \end{bmatrix} \qquad Y_j = \begin{bmatrix} y'_m(0) \\ y'_m(1) \\ \vdots \\ y'_m(t_f) \end{bmatrix}$$

where $Y_j$ is a vector of centred position measurement of coefficients $y'_m(t)$, and

$$\varphi(t) = [\cos(y_m(t)) \quad \sin(y_m(t)) \quad \cos(2y_m(t)) \quad \sin(2y_m(t)) \quad \cdots$$
$$\cdots \frac{1}{(\omega_r)^2}\cos(y_m(t)) \quad \frac{1}{(\omega_r)^2}\sin(y_m(t)) \quad \frac{1}{(2\omega_r)^2}\cos(2y_m(t)) \quad \frac{1}{(2\omega_r)^2}\sin(2y_m(t)) \quad \cdots]$$

and $\theta^T = [a_1 \quad b_1 \quad a_2 \quad b_2 \quad \cdots \quad \alpha'_1 \quad \beta'_1 \quad \alpha'_2 \quad \beta'_2 \quad \cdots]$ a transposed vector of the parameters characterizing the coder errors and the torque undulations, and
$D_j$ a vector of centred disturbance terms.

8. The method according to claim 7, wherein the components $\varphi(t)$ of $\phi_j$ and the components $y'_m(t)$ of $Y_j$ are filtered, wherein the filtering can be high-pass or low-pass or band-pass.

9. The method according to claim 7 or claim 8, wherein the identifiable whole matrix relationship $Y = \phi\theta + D$ with:

$$Y = \begin{bmatrix} Y_1 \\ Y_2 \\ \vdots \\ Y_n \end{bmatrix} \qquad \phi = \begin{bmatrix} \phi_1 \\ \phi_2 \\ \vdots \\ \phi_n \end{bmatrix}$$

is used to produce an estimation $\hat{\theta}$ of the parameters characterizing the coder errors and the torque undulations by linear regression and application of a least squares relationship according to $\hat{\theta} = (\phi^T\phi)^{-1}\phi^T Y$.

10. The method according to claim 7 or claim 8, wherein the identifiable whole matrix relationship $Y = \theta\phi + D$ with:

$$Y = \begin{bmatrix} Y_1 \\ Y_2 \\ \vdots \\ Y_n \end{bmatrix} \qquad \phi = \begin{bmatrix} \phi_1 \\ \phi_2 \\ \vdots \\ \phi_n \end{bmatrix}$$

is used to produce an estimation $\hat{\theta}$ of the parameters characterizing the coder errors and the torque undulations and with a regularization method using the following relationship:

$$\hat{\theta} = (\phi^T \phi + H)^{-1} \phi^T Y$$

where $H$ is a square matrix defined positive of the size of $\phi^T \phi$.

**11.** The method according to claim 7 or claim 8, wherein an interferometric optical measurement method is implemented for measuring the coder position errors, said measurements being made on a finite number $n_p$ of positions of the axis, and wherein the estimation $\hat{\theta}$ of the parameters characterizing the coder errors and the torque undulations is obtained by minimizing a quadratic criterion $J = (Y - \phi\theta)^T(Y - \phi\theta)$ under the equality constraint $E_c = C\theta$, where C is a matric such that

$$C = \begin{bmatrix} \cos{(y_1^*)} & \sin{(y_1^*)} & \cdots & \cos{(Ny_1^*)} & \sin{(Ny_1^*)} & 0_{1,N_l} \\ \vdots & \vdots & \vdots & \vdots & \vdots & \vdots \\ \cos{(y_{n_p}^*)} & \sin{(y_{n_p}^*)} & \cdots & \cos{(Ny_{n_p}^*)} & \cos{(Ny_{n_p}^*)} & 0_{1,N_l} \end{bmatrix}$$

$y_i^*$ corresponding to the $n_p$ measurement positions on the axis, $i \in [1, \cdots n_p]$,
and $N$ being the maximum harmonic rank of a Fourier series decomposition of the coder errors.

**12.** The method according to claim 9 or claim 10 or claim 11, wherein a calculation device is implemented, which is configured for the execution in real time, in a compensation calculation block, of the calculation of a coder error compensation signal in order to compensate for the coder errors, and the calculation device is configured to take into account in real time the torque undulations, and wherein the estimation $\hat{\theta}$ of the vector $\theta$ of the parameters characterizing the coder errors and the torque undulations is calculated by iteration: after a first repetition of test phases and a first calculation of the parameters characterizing the coder errors and the torque undulations by solving the global matrix relationship, a first estimated vector $\hat{\theta}_1$ is estimated, the coder error compensation signal being then calculated and the torque undulations being then taken into account on the basis of said first estimated vector $\hat{\theta}_1$, a new repetition of test phases and a new calculation of the parameters characterizing the coder errors and the torque undulations by solving the global matrix relationship are performed on the system so-compensated on the basis of the first estimated vector $\hat{\theta}_1$, a new estimated vector $\hat{\theta}_2$ being estimated, the coder error compensation signal being then calculated and the torque undulations being then taken into account on the basis of the sum of the previous estimated vector $\hat{\theta}_1$ and the new estimated vector $\hat{\theta}_2$, and subsequent iterations are performed on the compensated system on the basis of the sum of the previous estimated vectors $\hat{\theta}_1 + \hat{\theta}_2 + \hat{\theta}_3 \ldots$

**13.** The method according to anyone of claims 1 to 12, wherein the number $N_l$ of harmonics $k\omega_{rj}$ is identical for the n tests with rotation setpoints at different speeds $\omega_{rj}$.

**14.** The method according to anyone of claims 1 to 13, wherein certain harmonics $k\omega_{rj}$ are omitted for the estimation of the parameters characterizing the coder errors and the torque undulations.

**15.** A device having at least one rotary axis, said device being a motion simulator or a centrifuge and including a looped system including at least one actuator for rotating the axis and an angle coder producing a position measurement signal of said axis, and including a calculation device for at least controlling said actuator, and including a calculation device for at least controlling said actuator, the calculation device receiving, on the one hand, a setpoint signal at the system input, in particular a position setpoint signal $y_c(t)$ and, on the other hand, the measurement signal, for looping the system, the rotation actuator generating torque undulations $d_m(t)$, the coder producing coder errors $d_c(t)$ which, for a setpoint signal $y_c(t)$ that corresponds to a rotation of the axis at a speed $\omega_r$ supposed to be constant, have a spectrum consisted of the fundamental rotation frequency $\omega_r$ and its harmonics $k\omega_r$, $k \in \mathbb{N}$, the calculation device further calculating, in a corrector, a setpoint command signal for correcting the coder errors, **characterized in that** the calculation device is configured to execute the method according to any one of claims 1 to 14.

[Fig. 1]

[Fig. 1] ETAT DE LA TECHNIQUE

[Fig. 2]

[Fig. 2] ETAT DE LA TECHNIQUE

[Fig. 3]

[Fig. 4]

[Fig. 4]

Diagramme de Bode

Fonction de sensibilité directe

[Fig. 5]

[Fig. 5]                                                    Diagramme de Bode

Fréquence (rad/s)

[Fig. 6]

[Fig. 6]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5138564 A

- EP 2116912 A

**Littérature non-brevet citée dans la description**

- **X.D. LU** ; **R. GRAETZ** ; **D. AMIN-SHAHIDI**. *K. Smeds dans CIRP annals*, 2010, vol. 59
- Study on self-calibration angle encoder using simulation method. **DE WANG YAN et al.** BIOMEDICAL PHOTONICS AND OPTOELECTRONIC IMAGING. SOCIETY FOR OPTICAL ENGINEERING, vol. 9903

- **DE VAU BERNARD et al.** An improved control structure for the tracking of sine command in a motion simulator. *PROCEEDINGS OF SPIE*, vol. 11057, ISBN 978-1-5106-3927-0
- **DE D. ALAZARD et al.** Robustesse et commande optimale. *CEPADUES*, 1999
- **DE I.D. LANDAU**. Commande des systèmes. *Hermès*, 2002
- **PHILIPPE DE LARMINAT**. Automatique appliquée. *Hermès*, 2009